Europäisches Patentamt

European Patent Office

Office européen des brevets

(19)

(11) **EP 1 729 122 A1**

(12) **EUROPEAN PATENT APPLICATION**
published in accordance with Art. 158(3) EPC

(43) Date of publication:
**06.12.2006 Bulletin 2006/49**

(51) Int Cl.:
***G01N 27/416*** (2006.01)

(21) Application number: **04821367.2**

(22) Date of filing: **08.12.2004**

(86) International application number:
**PCT/JP2004/018252**

(87) International publication number:
**WO 2005/083413 (09.09.2005 Gazette 2005/36)**

(84) Designated Contracting States:
**DE FR GB IT**

(30) Priority: **01.03.2004 JP 2004056468**

(71) Applicant: **Matsushita Electric Industries Co., Ltd.**
**Kadoma-shi,**
**Osaka 571-8501 (JP)**

(72) Inventor: **NAKATSUKA, Junji**
**Hirakata-shi,**
**Osaka 573-0091 (JP)**

(74) Representative: **Grünecker, Kinkeldey,**
**Stockmair & Schwanhäusser**
**Anwaltssozietät**
**Maximilianstrasse 58**
**80538 München (DE)**

(54) **BIOSENSOR, BIOSENSOR CHIP, AND BIOSENSOR DEVICE**

(57)     A biosensor device includes a biosensor having a plurality of biosensor sections each including a working pole and a counter pole. The biosensor device further includes a singal processing circuit for measuring a current flowing from the working pole when different voltages are applied between the working poles and the counter poles of the respective biosensor sections and for specifying a concentration of a to-be-measured material from a measured current value.

FIG. 8

EP 1 729 122 A1

**Description**

**Technical Field**

The present invention relates to a biosensor and a biosensor device for electrically detecting a chemical or a bio-material such as oligonucleotides, antigens, enzymes, peptides, antibodies, DNA fragments, RNA fragments, glucose, lactic acid, cholesterols, and the like.

**Background Art**

In recent years, the kinds of bio-sensing instruments using disposable sample pieces are increasing, and it is longed to measure and analyze easily in a short period of time a specified component in a biogenic humor such as blood, plasma, urine, saliva, and the like, or all proteins that a certain cell creates until a certain time, that is, proteome. Further, it is expected to realize, within the foreseeable future, tailor-made medical cares that perform treatment and medication suitable for personal SNP (single Nucleotide Polymorphism) information by genetic diagnosis using disposable DNA chips. Of the bio-sensing instruments, biosensors of blood sugar level, lactate level, and the like using enzymes for promoting chemical reactions have been already widespread.

A biosensor device, which is disclosed in Patent Document 1, to be used for detecting glucose in blood samples, that is, to be used for blood sugar detection will be described below as a conventional example. Wherein, a "biosensor" in the present description means a disposable portion including detection portion for detecting a chemical such as a bio-material, a "biosensor portion" means a portion having one pair of a working pole and a counter pole in the biosensor, and a "biosensor chip" means a disposable portion of a substrate on which a biosensor, a measuring circuit, and the like are mounted. Further, a "biosensor device" means a device as a whole in which an analyzing circuit, a display device, and the like are added to the biosensor or the biosensor chip.

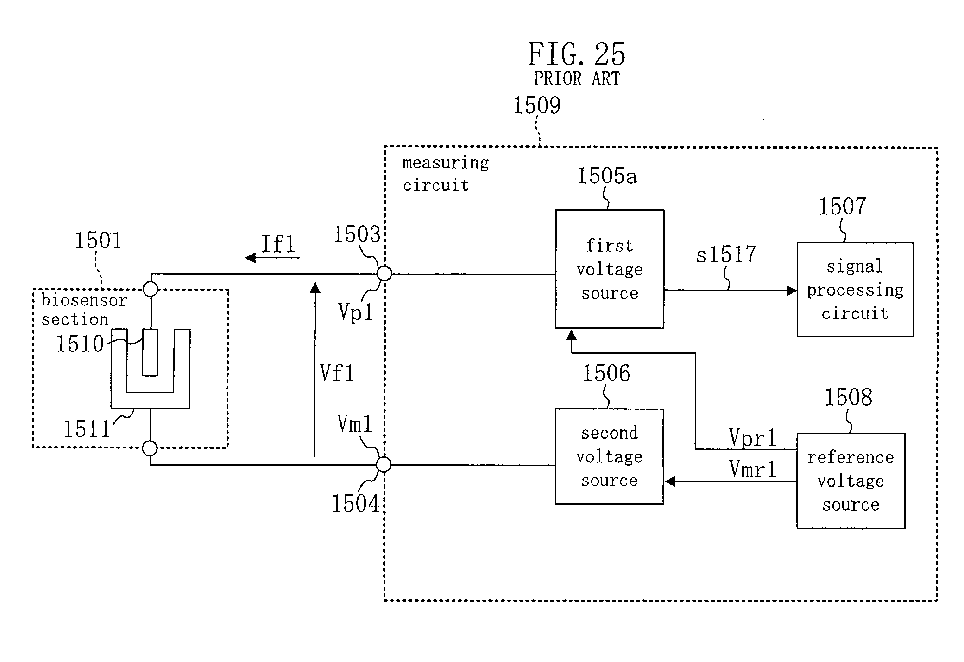

FIG. 25 is a block circuit diagram showing a construction of a conventional biosensor device. As shown in the drawing, the conventional biosensor includes a biosensor 1501 for detecting a component to be measured included in a sample and for generating an electric signal, and a measuring circuit **1509** for processing the electric signal generated in the biosensor **1501.** Also, the conventional biosensor device is provided with, though not shown, an analyzing circuit for analyzing data obtained in the measuring circuit **1509,** a display section for displaying a measured result or an analyzed result, and the like according to needs.

The biosensor 1501 includes, in a reaction chamber thereof, a working pole (anode) **1510** and a counter pole (cathode) **1511** facing the working pole **1510** with an interval left to which a sample is to be filled, and a reaction reagent (not shown) made of an enzyme, a mediator, microbes or the like according to the component to be measured is applied to the working pole **1510** and the counter pole **1511.**

The measuring circuit **1509** includes: a working pole electrode **1503** connected to the working pole **1510** at measurement by means of a conductive wiring within the biosensor **1501;** a counter pole electrode **1504** connected to the counter pole **1511** at the measurement by means of a conductive wiring; a first voltage source **1505a** having an ammeter and connected to the working pole electrode **1503;** a second voltage source **1506** connected to the counter pole electrode **1504;** a reference voltage source **1508** which supplies working pole control voltage **Vpr1** to the first voltage source **1505a** and counter pole control voltage **Vmr1** to the second voltage source **1506;** and a signal processing circuit **1507** connected to the first voltage source **1505a.**

In the conventional biosensor device, the working pole electrode **1503** and the counter pole electrode **1504** reference the working pole control voltage **Vpr1** and the counter pole control voltage **Vmr1,** respectively, which are generated in the reference voltage source **1508.** In other words, the working pole electrode **1503** receives voltage **Vp1** equivalent to the working pole control voltage **Vpr1** through the first voltage source **1505a** while the counter pole electrode **1504** receives voltage **Vm1** equivalent to the counter pole control voltage **Vmr1** through the second voltage source **1506.**

$$Vp1 = Vpr1 \qquad \ldots (1)$$

$$Vm1 = Vmr1 \qquad \ldots (2)$$

Accordingly, biosensor application voltage **Vf1,** which is differential voltage between the working pole control voltage **Vpr1** and the counter pole control voltage **Vmr1,** is applied between the working pole **1510** and the counter pole **1511** of the biosensor **1501.**

$$Vf1 = Vp1 - Vm1 = Vpr1 - Vmr1 \quad \ldots (3)$$

Upon application of a blood sample to the biosensor **1501** under this condition, a reaction between the reagent and a component to be measured in the blood starts to allow a working pole current **If1** to flow. The first voltage source **1505a** having the ammeter measures the working pole current **If1** and output the measured result as a working pole current amount signal **s1517** to the signal processing circuit **1507**. Then, the signal processing circuit **1507** computes the working pole current amount signal **s1517** to determine a blood sugar level. In the case where the biosensor device includes a display device, for example, the determined result is displayed in the display device.

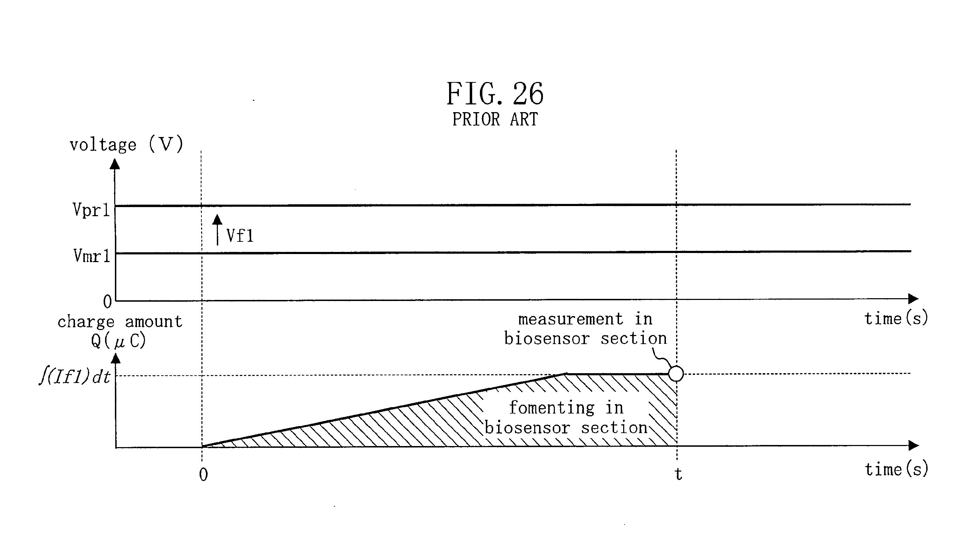

FIG. **26** is a chart chronologically showing measurement operation of the conventional biosensor device shown in FIG. **25.**

The voltage graph at the upper part of the drawing indicates that the biosensor application voltage **Vf1,** which is the differential voltage between the working pole control voltage **Vpr1** and the counter pole control voltage **Vmr1,** is applied to the biosensor **1501** for blood sugar measurement. The charge graph at the lower part of FIG. 26 indicates time variation in an integrated value of the working pole current **If1** in relation to blood sugar level. The relationship between the charge amount **Q** and the working pole current **If1** is expressed by the following expression (4).

$$\text{Charge amount } Q = \int (If1) dt \quad \ldots (4)$$

When a blood sample is applied at the time t=0 (s), a reaction by the reagent starts at the same time. In association therewith, the reaction causes the charge to be generated. When there is no blood sugar finally, the reaction stops and no charge is generated. The charge amount **Q** is measured at the time after no charge is generated to obtain a blood sugar level.

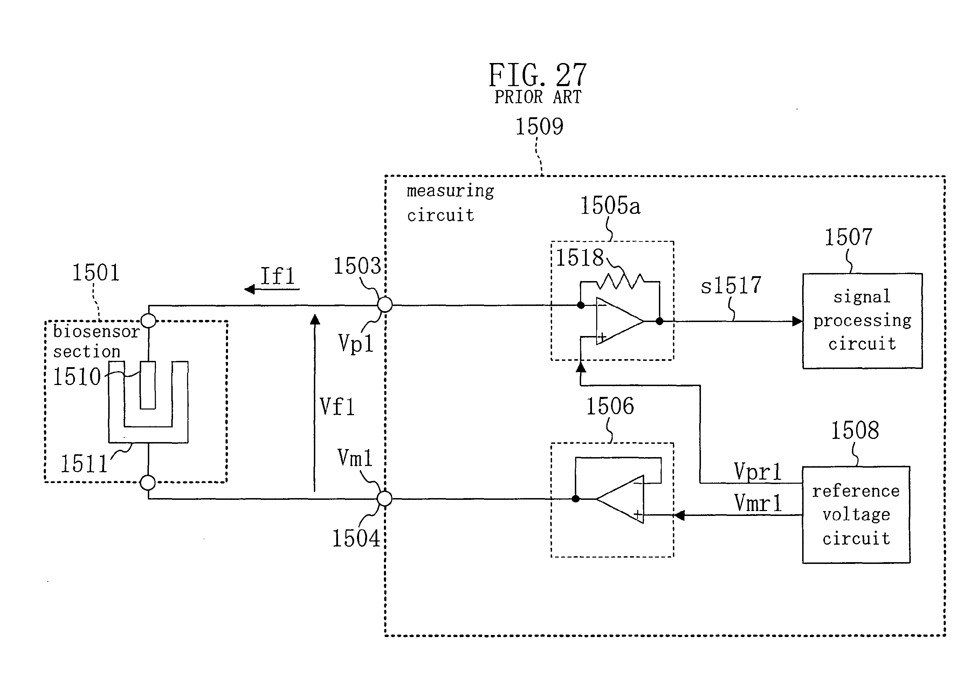

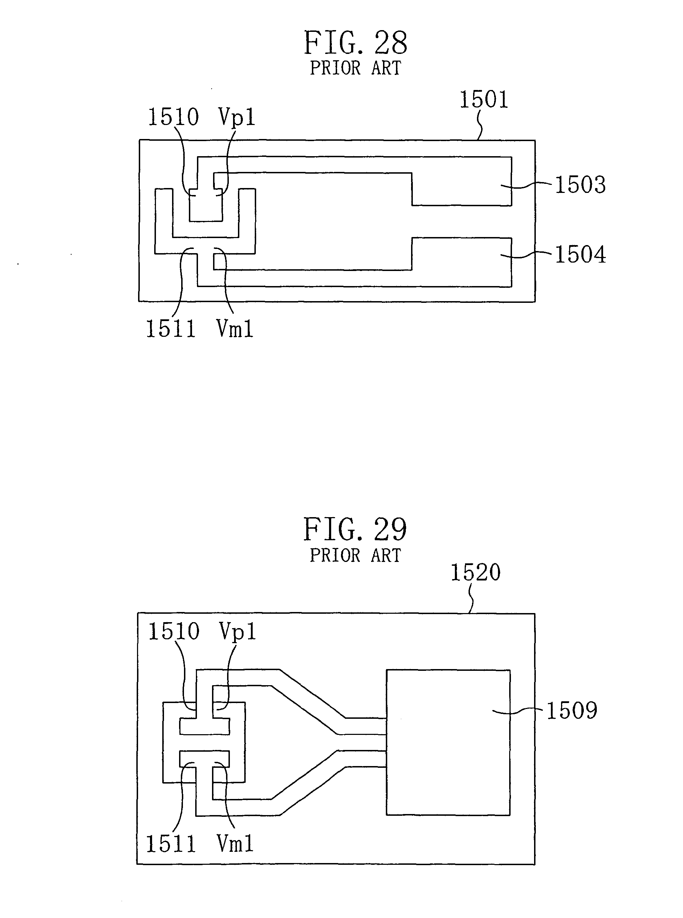

Wherein, FIG. **27** is a block circuit diagram showing one example of circuit constructions of the first voltage source **1505a** having the ammeter and the second voltage source **1506** in the biosensor device shown in FIG. **25.** FIG. **28** is a plan view showing a constitutional example of the biosensor **1501**. Further, FIG. **29** is a plan view showing a constitutional example of the biosensor chip **1520** in the case where the biosensor **1501** and the measuring circuit 1509 are formed on one chip so as to be disposable.

As shown in FIG. **27,** the first voltage source **1505a** has a circuit construction in which an operational amplifier is negative-feedbacked by a feedback resistor **1518** while the second voltage source **1506** has an operational amplifier in a null-amplifier structure, that is, a buffer circuit structure, whereby the aforementioned function is realized.

Patent Document 1: Japanese Patent Application Laid Open Publication No. 2002-340853A (FIG. 7)

**Disclosure of the Invention**

**Problems that the Invention is to solve**

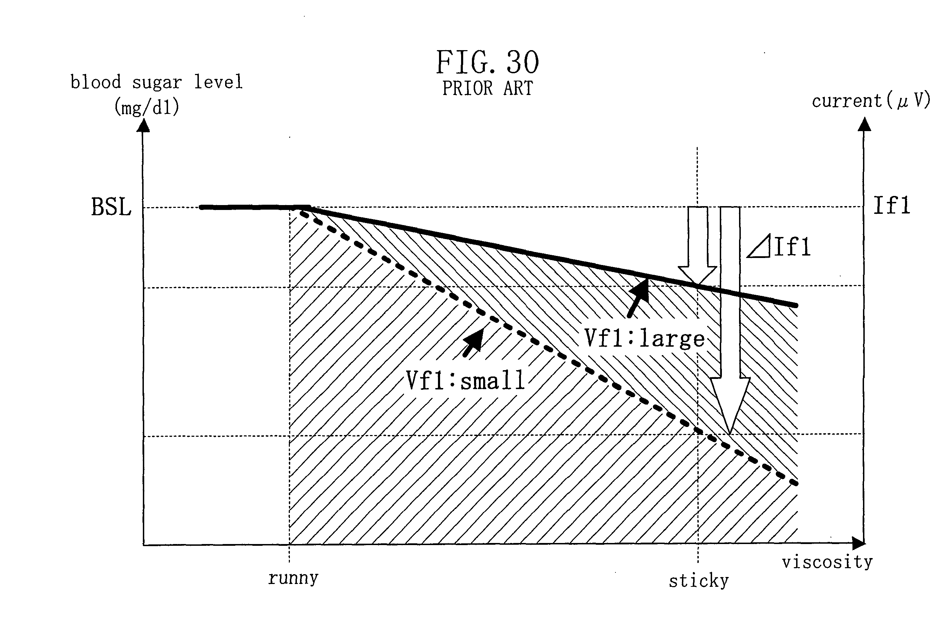

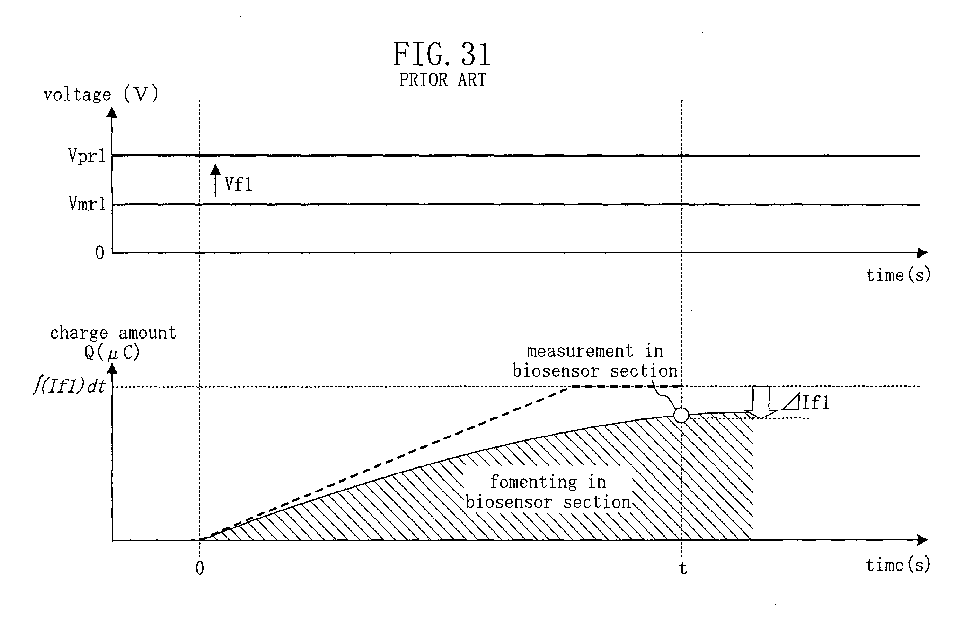

FIG. **30** is a graph schematically showing the relationship among the blood sugar level, the viscosity of a blood sample, and the biosensor application voltage **Vf1** in the conventional biosensor device, and FIG. **31** is a chart showing the biosensor application voltage **Vf1** and an actual charge amount **Q** at measurement by the conventional biosensor device. Wherein, "BSL" in FIG. 30 means the blood sugar level.

In measurement using the biosensor device, voltage application between the working pole 1510 and the counter pole **1511** of the biosensor **1501** accelerates the reaction between blood sugar and the reagent (or a reaction of blood sugar by a reagent as a catalysis) to generate an electric field in the reaction chamber. A polarized particulate component in the blood such as blood cells moves in the chamber by the electric field to accelerate the reaction. When the viscosity of the blood is high, however, the movement of the particulate component is inhibited, retarding the reaction. For this reason, the reaction with the reagent is more inhibited as the viscosity of the blood sample becomes higher, resulting in indication of a blood sugar level lower than an actual level, as shown in FIG. **30** and FIG. **31.**

In addition, as the biosensor application voltage **Vf1** becomes lower, the electric field in the reaction chamber becomes smaller in proportion and the movement amount of the polarized particulate component in the blood within the chamber becomes smaller in proportion. Namely, influence of the viscosity of the blood sample becomes severe especially when the biosensor application voltage **Vf1** is low. As described above, in the conventional biosensor device, when the sample has high viscosity, the reaction amount with the reagent decreases, indicating a blood sugar level lower than an actual level.

The present invention has its object of providing a biosensor, a biosensor chip, and a biosensor device which are capable of performing accurate measurement regardless of the viscosity of samples.

**Means of Solving the Problems**

In order to solve the above problems, a first biosensor device according to the present invention includes: a biosensor including a biosensor section having a working pole and a counter pole facing the working pole with an interval left for allowing a to-be-tested fluid containing a to-be-measured material to flow therein; and a measuring circuit for applying voltage between the working pole and the counter pole at measurement and for measuring a concentration of the to-be-measured material from a current flowing in the biosensor section, wherein the measuring circuit changes the voltage applied between the working pole and the counter pole chronologically.

With the above construction, in the case where the to-be-tested fluid is blood or the like containing charged particulates, the particulates move by voltage application by the measuring circuit to cause the to-be-tested fluid to be stirred, attaining reduction in measurement time and high precision of a measured value. Hence, the biosensor device of the present invention can perform accurate measurement regardless of the viscosity of the to-be-tested fluid.

For example, the above measuring circuit may include: a working pole electrode connected to the working pole; a first voltage source that applies first voltage to the working pole electrode; a counter pole electrode connected to the counter pole; a second voltage source that applies second voltage to the counter pole electrode; an ammeter added to at least one of the first voltage source and the second voltage source; a reference voltage source that supplies working pole control voltage equivalent to the first voltage to the first voltage source and supplies counter pole control voltage equivalent to the second voltage to the second voltage source; and a signal processing circuit for processing a current amount signal output, according to the current flowing in the biosensor, from the first voltage source or the second voltage source to which the ammeter is added.

When the above measuring circuit applies voltage biased at a constant voltage and modulated by a rectangular wave to at least one of the working pole and the counter pole, reduction in the measurement time and an increase in measurement precision can be achieved.

When the above measuring circuit applies voltage biased at a constant voltage and modulated by a spreading code to at least one of the working pole and the counter pole, the to-be-tested fluid can be stirred effectively, reducing the measurement time and increasing the measurement precision, compared with those in the conventional biosensor devices, even in the case where plural kinds of particulates different in resonance frequency are contained in the to-be-tested fluid.

The above measuring circuit may apply voltage biased at a constant voltage and modulated by a sine wave to at least one of the working pole and the counter pole.

In this case, when the above measuring circuit further includes a low-pass-filter-equipped voltage source connected to the working pole or the counter pole and a $\Delta\Sigma$ modulator connected to the low-pass-filter-equipped voltage source and the voltage modulated by the sine wave is generated in series connection of the $\Delta\Sigma$ modulator and the low-pass-filter-equipped voltage source, the sine wave can be generated using a digital circuit, reducing the circuit area compared with the case using an analog circuit and the like.

A second biosensor device according to the present invention includes: a plurality of biosensors each including a biosensor section having a working pole and a counter pole facing the working pole with an interval left for allowing a to-be-tested fluid containing a to-be-measured material to flow therein; and a measuring circuit for applying different voltages between the working poles and the counter poles of the respective biosensor sections at measurement and for measuring a concentration of the to-be-measured material based on a current flowing in the working pole or the counter pole of each of the biosensor sections.

With the above construction, the measurement of the signals from the biosensor sections to which different voltages are applied enables estimation of the viscosity of the to-be-tested fluid. Also, an actual measured value can be corrected based on the viscosity of the to-be-tested fluid, and therefore, a measured value more accurate than the conventional cases can be obtained with the use of the biosensor device of the present invention.

If the above measuring circuit measures a concentration of the to-be-measured material based on the currents flowing from the working poles and the currents flowing from the counter poles of the biosensor sections, the measurement precision can be increased compared with the case where only a current flowing from the working pole or the counter pole is measured.

The biosensor further includes a sample application spot to which the to-be-tested fluid is to be spot-applied and capillaries for supplying the to-be-tested fluid to the biosensor sections, and the plurality of biosensor sections are connected in series with each other by means of the capillaries when viewing from the sample application spot. With this construction, for example, detection of the difference between time when the current from the biosensor section near to the sample application spot is detected and time when the current from the biosensor section far from the sample application spot leads to a viscosity of the to-be-tested fluid. Further, correction according to the thus obtained viscosity value attains more accurate measurement with higher precision than the conventional cases.

Further, in the case where the biosensor further includes a sample application spot to which the to-be-tested fluid is to be spot-applied and capillaries for supplying the to-be-tested fluid to the biosensor sections and the plurality of biosensor sections are connected in parallel with each other by means of the capillaries when viewing from the sample application spot, the capillaries for supplying the to-be-tested fluid to the biosensor sections being different from each other in size, the viscosity of the to-be-tested fluid can be obtained from the difference in time required for the fluid to pass through the respective capillaries. Accordingly, correction of an actual measured value based on the thus obtained viscosity enables more accurate measurement with higher precision than the conventional cases.

Alternatively, if the biosensor further includes a sample application spot to which the to-be-tested fluid is to be spot-applied, a first capillary and a second capillary, which are different from each other in size, for supplying the to-be-tested fluid to the biosensor sections, and the plurality of biosensor sections, at least two biosensor sections of the plurality of biosensor sections are connected with each other in series by means of the first capillary when viewing from the sample application spot, at least two biosensor sections of the plurality of biosensor sections are connected with each other in series by means of the second capillary when viewing from the sample application spot, and the biosensor sections connected by means of the first capillary and the biosensor sections connected by means of the second capillary are connected in parallel with each other when viewing from the sample application spot, a larger number of differences in arrival time of the currents flowing from the biosensor sections to the measuring circuit can be measured, enabling further precise measurement.

If the plurality of biosensor sections have different characteristics, a viscosity of the to-be-tested fluid can be obtained from the arrival time differences in the currents flowing from the biosensor sections to the measuring circuit or the differences from an actual value, enabling correction of the measured value.

A third biosensor device according to the present invention includes: a biosensor including a plurality of biosensor sections each having a working pole and a counter pole facing the working pole with an interval left for allowing a to-be-tested fluid containing a to-be-measured material to flow therein, a sample application spot to which the to-be-tested fluid is to be spot-applied, and a capillary for supplying the to-be-tested fluid to the biosensor sections; and a measuring circuit for applying voltage between the working pole and the counter pole of each of the biosensor sections at measurement and for measuring a concentration of the to-be-measured material based on a current flowing from the working pole or the counter pole of each of the biosensor sections, wherein the plurality of biosensor sections are connected in series with each other by means of the capillary when viewing from the sample application spot.

With the above construction, more accurate measurement with higher precision than the conventional cases can be realized as above.

A fourth biosensor device according to the present invention includes: a biosensor including a plurality of biosensor sections each having a working pole and a counter pole facing the working pole with an interval left for allowing a to-be-tested fluid containing a to-be-measured material to flow therein, a sample application spot to which the to-be-tested fluid is to be spot-applied, and capillaries for supplying the to-be-tested fluid to the biosensor sections; and a measuring circuit for applying voltage between the working pole and the counter pole of each of the biosensor sections at measurement and for measuring a concentration of the to-be-measured material based on a current flowing from the working pole or the counter pole of each of the biosensor sections, wherein the plurality of biosensor sections are connected in parallel with each other by means of the capillaries when viewing from the sample application spot, the capillaries for supplying the to-be-tested fluid to the biosensor sections being different from each other in size. With the above construction, a concentration of the to-be-measured material can be measured with higher precision than the conventional cases, as well.

A fifth biosensor device according to the present invention includes: a biosensor including a plurality of biosensor sections each having a working pole and a counter pole facing the working pole with an interval left for allowing a to-be-tested fluid containing a to-be-measured material to flow therein, a sample application spot to which the to-be-tested fluid is to be spot-applied, and a first capillary and a second capillary for supplying the to-be-tested fluid to the biosensor sections; and a measuring circuit for applying voltage between the working pole and the counter pole of each of the biosensor sections at measurement and for measuring a concentration of the to-be-measured material based on a current flowing from the working pole or the counter pole of each of the biosensor sections, wherein the first capillary and the second capillary are different from each other in size, at least two biosensor sections of the plurality of biosensor sections are connected with each other in series by means of the first capillary when viewing from the sample application spot, at least two biosensor sections of the plurality of biosensor sections are connected with each other in series by means of the second capillary when viewing from the sample application spot, and the biosensor sections connected by means of the first capillary and the biosensor sections connected by means of the second capillary are connected in parallel with each other when viewing from the sample application spot.

With the above construction, a larger number of differences in arrival time of the currents flowing from the biosensor sections to the measuring circuit can be measured, enabling further precise measurement.

A sixth biosensor device according to the present invention includes: a biosensor including a plurality of biosensor sections different from each other in characteristics, each of the plurality of biosensor sections including a working pole and a counter pole facing the working pole with an interval left for allowing a to-be-tested fluid containing a to-be-measured material to flow therein; and a measuring circuit for applying voltage between the working pole and the counter pole of each of the biosensor sections at measurement and for measuring a concentration of the to-be-measured material based on a current flowing from the working pole or the counter pole of each of the biosensor sections.

With the above construction, the measured value can be corrected according to the viscosity of the to-be-tested fluid based on the differences in arrival time of the currents flowing from the biosensor sections or the difference from the measured value, enabling more accurate measurement with higher precision than the conventional cases.

A first biosensor chip according to the present invention includes: a biosensor including a biosensor section having a working pole and a counter pole facing the working pole with an interval left for allowing a to-be-tested fluid containing a to-be-measure material to flow therein; and a measuring circuit provided on a substrate together with the biosensor for applying voltage between the working pole and the counter pole at measurement and for measuring a concentration of the to-be-measured material from currents flowing in the biosensor section, wherein the measuring circuit changes the voltage applied between the working pole and the counter pole chronologically.

With the above construction, the to-be-measured material can be measured more precisely within a shorter time period than the conventional cases. Further, the biosensor chip including the measuring circuit can be discarded, so that the main body of the biosensor device can be used in common to measurement of plural kinds of materials, for example.

The second biosensor chip according to the present invention includes: a biosensor including a plurality of biosensor sections each having a working pole and a counter pole facing the working pole with an interval left for allowing a to-be-tested fluid containing a to-be-measured material to flow therein; and a measuring circuit provided on a substrate together with the biosensor for applying different voltages between the working poles and the counter poles of the biosensor sections at measurement and for measuring a concentration of the to-be-measured material based on a current flowing from the working poles or the counter poles of the biosensor sections.

With the above construction, measurement with higher precision than the conventional cases can be realized and concentrations of plural kinds of materials to be measured can be measured using the main body of the biosensor device in common.

A third biosensor chip according to the present invention includes: a biosensor including: a plurality of biosensor sections each having a working pole and a counter pole facing the working pole with an interval left for allowing a to-be-tested fluid containing a to-be-measured material to flow therein; a sample application spot to which the to-be-tested fluid is to be spot-applied; and capillaries for supplying the to-be-tested fluid to the biosensor sections; and a measuring circuit provided on a substrate together with the biosensor for applying voltage between the working pole and the counter pole of each of the biosensor sections at measurement and for measuring a concentration of the to-be-measured material based on a current flowing from the working pole or the counter pole of each of the biosensor sections, wherein the plurality of biosensor sections are connected in series with each other by means of a capillary when viewing from the sample application spot.

With the above construction, measurement with higher precision than the conventional cases can be realized and concentrations of plural kinds of materials to be measured can be measured using the main body of the biosensor device in common.

A fourth biosensor chip according to the present invention includes: a plurality of biosensor sections each having a working pole and a counter pole facing the working pole with an interval left for allowing a to-be-tested fluid containing a to-be-measured material to flow therein; a sample application spot to which the to-be-tested fluid is to be spot-applied; and capillaries for supplying the to-be-tested fluid to the biosensor sections; and a measuring circuit provided on a substrate together with the biosensor for applying voltage between the working pole and the counter pole of each of the biosensor sections at measurement and for measuring a concentration of the to-be-measured material based on a current flowing from the working pole or the counter pole of each of the biosensor sections, wherein the plurality of biosensor sections are connected in parallel with each other by means of the capillaries when viewing from the sample application spot, the capillaries for supplying the to-be-tested fluid to the biosensor sections being different from each other in size.

With the above construction, measurement with higher precision than the conventional cases can be realized and concentrations of plural kinds of materials to be measured can be measured using the main body of the biosensor device in common.

A fifth biosensor chip according to the present invention includes: a biosensor including: a plurality of biosensor sections each having a working pole and a counter pole facing the working pole with an interval left for allowing a to-be-tested fluid containing a to-be-measured material to flow therein; a sample application spot to which the to-be-tested fluid is to be spot-applied; and a first capillary and second capillary for supplying the to-be-tested fluid to the biosensor sections; and a measuring circuit provided on a substrate together with the biosensor for applying voltage between the working pole and the counter pole of each of the biosensor sections at measurement and for measuring a concentration of the to-be-measured material based on a current flowing from the working pole or the counter pole of each of the biosensor sections, wherein the first capillary and the second capillary are different from each other in size, at least two biosensor sections of the plurality of biosensor sections are connected with each other in series by means of the first capillary when viewing from the sample application spot, at least two biosensor sections of the plurality of biosensor sections are connected with each other in series by means of the second capillary when viewing from the sample application spot, and the biosensor sections connected by means of the first capillary and the biosensor sections connected by mans of the second capillary are connected in parallel with each other when viewing from the sample application spot.

With the above construction, measurement with higher precision than the conventional cases can be realized and concentrations of plural kinds of materials to be measured can be measured using the main body of the biosensor device in common. Especially, the biosensor chip of the present invention is more preferably used in the case where higher precision is required than in the third and fourth biosensor chips.

A sixth biosensor chip according to the present invention includes: a biosensor including a plurality of biosensor sections different from each other in characteristics, each of the plurality of biosensor sections including a working pole and a counter pole facing the working pole with an interval left for allowing a to-be-tested fluid containing a to-be-measured material to flow therein; and a measuring circuit provided on a substrate together with the biosensor for applying voltage between the working pole and the counter pole of each of the biosensor sections at measurement and for measuring a concentration of the to-be-measured material base on a current flowing from the working pole or the counter pole of each of the biosensor sections.

With the above construction, measurement with higher precision than the conventional cases can be realized and concentrations of plural kinds of materials to be measured can be measured using the main body of the biosensor device in common.

A first biosensor according to the present invention includes: a plurality of biosensor sections each including a working pole and a counter pole facing the working pole with an interval left for allowing a to-be-tested fluid containing a to-be-measured material to flow therein; a sample application spot to which the to-be-tested fluid is to be spot-applied; and a capillary for supplying the to-be-tested fluid to the plurality of biosensor sections, wherein the plurality of biosensor sections are connected in series with each other by means of the capillary when viewing from the sample application spot.

In the above construction, if a measuring circuit capable of detecting the currents flowing from the working poles or the counter poles of the plurality of biosensor sections is combined, measurement with higher precision than the conventional cases can be attained regardless of the viscosity of the to-be-tested fluid.

A second biosensor according to the present invention includes: a plurality of biosensor sections each including a working pole and a counter pole facing the working pole with an interval left for allowing a to-be-tested fluid containing a to-be-measured material to flow therein; a sample application spot to which the to-be-tested fluid is to be spot-applied; and capillaries for supplying the to-be-tested fluid to the plurality of biosensor sections, wherein the plurality of biosensor sections are connected in parallel with each other by means of the capillaries when viewing from the sample application spot, the capillaries for supplying the to-be-tested fluid to the plurality of biosensor sections being different from each other in size.

In the above construction, if a measuring circuit capable of detecting the currents flowing from the working poles or the counter poles of the plurality of biosensor sections is combined, measurement with higher precision than the conventional cases can be attained regardless of the viscosity of the to-be-tested fluid.

A third biosensor according to the present invention includes: a plurality of biosensor sections each including a working pole and a counter pole facing the working pole with an interval left for allowing a to-be-tested fluid containing a to-be-measured material to flow therein; a sample application spot to which the to-be-tested fluid is to be spot-applied; and a first capillary and a second capillary for supplying the to-be-tested fluid to the plurality of biosensor sections, wherein the first capillary and the second capillary are different from each other in size, at least two biosensor sections of the plurality of biosensor sections are connected in series with each other by means of the first capillary when viewing from the sample application spot, at least two biosensor sections of the plurality of biosensor sections are connected in series with each other by means of the second capillary when viewing from the sample application spot, and the biosensor sections connected by means of the first capillary and the biosensor sections connected by means of the second capillary are connected in parallel with each other when viewing from the sample application spot.

In the above construction, if a measuring circuit capable of detecting the currents flowing from the working poles or the counter poles of the plurality of biosensor sections is combined, measurement with higher precision than the conventional cases can be attained regardless of the viscosity of the to-be-tested fluid.

A fourth biosensor according to the present invention includes a plurality of biosensor sections different in characteristics each including a working pole and a counter pole facing the working pole with an interval left for allowing a to-be-tested fluid containing a to-be-measured material to flow therein.

With the above construction, the measuring circuit capable of detecting the currents flowing from the working poles or the counter poles of the plurality of biosensor sections is combined, attaining measurement with higher precision than the conventional cases regardless of the viscosity of the to-be-tested fluid.

## Effects of the Invention

As described above, the biosensor device according to the present invention includes: a biosensor including a biosensor section having a working pole and a counter pole facing the working pole with an interval left for allowing a to-be-tested fluid containing a to-be-measured material to flow therein; and a measuring circuit for applying voltage between the working pole and the counter pole at measurement and for measuring a concentration of the to-be-measured material from a current flowing in the biosensor section, wherein the measuring circuit changes the voltage applied between the working pole and the counter pole chronologically. Whereby, reduction in measurement time and an increase in precision can be attained. To do so, voltage having a rectangular wave, voltage obtained by modulating bias voltage by a spreading code, voltage obtained by modulating bias voltage by a sine wave, or the like may be applied to the counter pole or the working pole, for example.

## Brief Description of the Drawings

FIG. **1** is a block circuit diagram showing a biosensor device according to Embodiment 1 of the present embodiment.
FIG. **2** is a chart showing the relationship between biosensor application voltage **Vf1** and a charge amount **Q** in the biosensor device according to Embodiment 1.
FIG. **3** is a chart showing the relationship between the biosensor application voltage **Vf1** and the charge amount **Q** in a biosensor device according to Embodiment 2 of the present invention.
FIG. **4** is a chart showing the relationship between the biosensor application voltage **Vf1** and the charge amount **Q** in a biosensor device according to Embodiment 3 of the present invention.
FIG. **5** is a block circuit diagram showing a biosensor device according to Embodiment 4 of the present invention.
FIG. **6** is a circuit diagram showing a biosensor device according to Embodiment 5 of the present invention.
FIG. **7** is a chart chronologically showing one example of measurement operation of the biosensor device according to Embodiment 5.
FIG. **8** is a block circuit diagram showing an example of circuit constructions of first to fourth voltage sources in the biosensor device according to Embodiment 5.
FIG. **9** is a plan view schematically showing a constitutional example of a biosensor of the biosensor device according to Embodiment 5.
FIG. **10** is a view showing a constitutional example of a biosensor chip on which the biosensor in Embodiment 5 and a measuring circuit are formed.
FIG. **11** is a performance graph of a conventional biosensor shown in FIG. **30** into which the principle of the present invention is remarked.
FIG. **12** is block circuit diagram showing a biosensor device according to Embodiment 6 of the present invention.
FIG. **13** is a chart chronologically showing one example of measurement operation of the biosensor device according to Embodiment 6.
FIG. **14** is a block circuit diagram showing an example of circuit constructions of first to fourth voltage sources in the biosensor device according to Embodiment 6.
FIG. **15** is a block circuit diagram showing a biosensor device according to Embodiment 7 of the present invention.
FIG. **16** is a chart chronologically showing one example of measurement operation of the biosensor device according to Embodiment 7.
FIG. **17** is a block circuit diagram showing an example of circuit constructions of first to fourth voltage sources in the biosensor device according to Embodiment 7.
FIG. **18** is a block circuit diagram showing a biosensor device according to Embodiment 8 of the present invention.
FIG. **19** is a plan view schematically showing a biosensor of the biosensor device according to Embodiment 8.
FIG. **20** is a chart chronologically showing one example of measurement operation of the biosensor device according to Embodiment 8.
FIG. **21** is a block circuit diagram showing one example of circuit constructions of first to fourth voltage sources in the biosensor device according to Embodiment 8.
FIG. **22** is a plan view showing a biosensor according to Embodiment 9 of the present invention.
FIG. **23** is a plan view showing a biosensor according to Embodiment 10 of the present invention.
FIG. **24** is a plan view showing a biosensor according to Embodiment 11 of the present invention.
FIG. **25** is a block circuit diagram showing a construction of the conventional biosensor device.
FIG. **26** is a chart chronologically showing measurement operation of the conventional biosensor device.
FIG. **27** is a block circuit diagram showing one example of circuit constructions of a first voltage source and a second voltage source in the conventional biosensor device.

FIG. **28** is a plan view showing a constitutional example of a biosensor of the conventional biosensor device.

FIG. **29** is a plan view showing a constitutional example of a biosensor chip of the conventional biosensor device.

FIG. **30** is a graph schematically showing the relationship among blood sugar level, viscosity of a blood sample, and biosensor application voltage **Vf1** in the conventional biosensor device.

FIG. **31** is a chart chronologically showing one example of measurement operation of the conventional biosensor device.

**Explanation of Reference Numerals**

| | |
|---|---|
| **1, 31, 34, 37, 38** | biosensor |
| **3, 503** | working pole electrode |
| **3a, 503a** | working pole terminal |
| **4, 504** | counter pole electrode |
| **4a, 504a** | counter pole terminal |
| **5, 518, 529** | feedback resistor |
| **6** | low-pass-filter-equipped voltage source |
| **8** | $\Delta\Sigma$ modulator |
| **9** | capacitor |
| **20** | biosensor chip |
| **33** | humor |
| **34a, 34b, 35, 35a, 35b, 36, 36a, 36b** | capillary |
| **501** | first biosensor section |
| **505, 505a** | first voltage source |
| **506, 506a** | second voltage source |
| **507** | signal processing circuit |
| **508** | reference voltage source |
| **509** | measuring circuit |
| **510, 510a, 510b** | working pole |
| **511, 511a, 511b** | counter pole |
| **521** | second biosensor section |
| **522, 522a, 522b** | working pole |
| **523, 523a, 523b** | counter pole |
| **527, 527a** | third voltage source |
| **528, 528a** | fourth voltage source |
| **550, 551, 552, 553, 555, 557, 558** | operational amplifier |
| **If1, If2** | working pole current |
| **Im1, Im2** | counter pole current |
| **Vf1, Vf2** | biosensor application voltage |
| **Vmr1** | counter pole control voltage |
| **Vmr2** | third counter pole control voltage |
| **Vmr3** | second counter pole control voltage |
| **Vpr1** | working pole control voltage |
| **s24, s25** | counter pole current amount signal |
| **s517, s17** | working pole current amount signal |

Best Mode for Carrying out the Invention

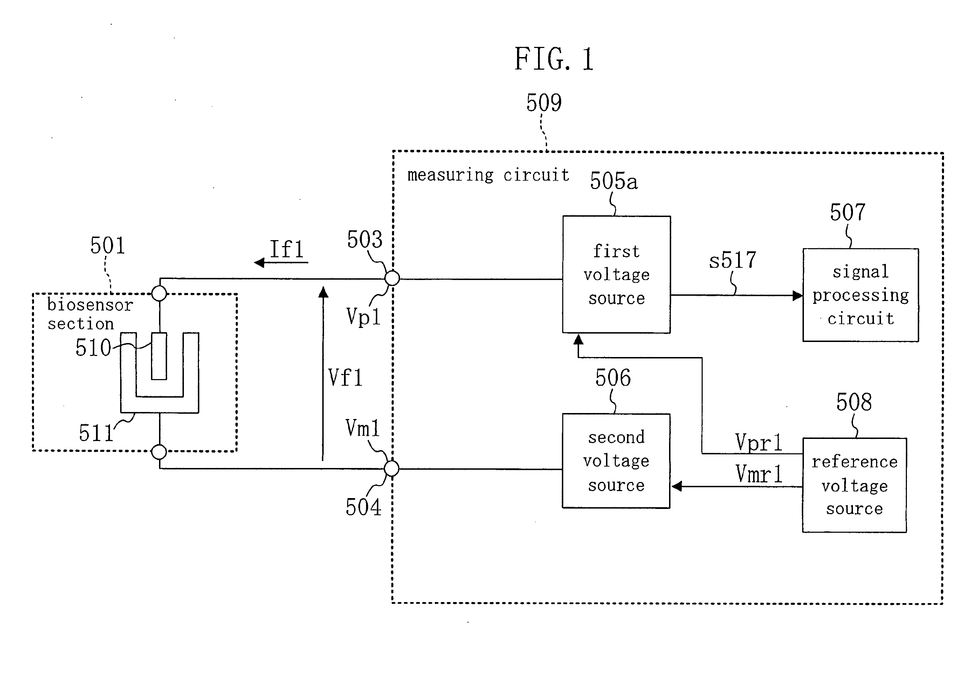

Embodiments of the present invention will be described below with reference to FIG. **1** to FIG. **31.**

(Embodiment 1)

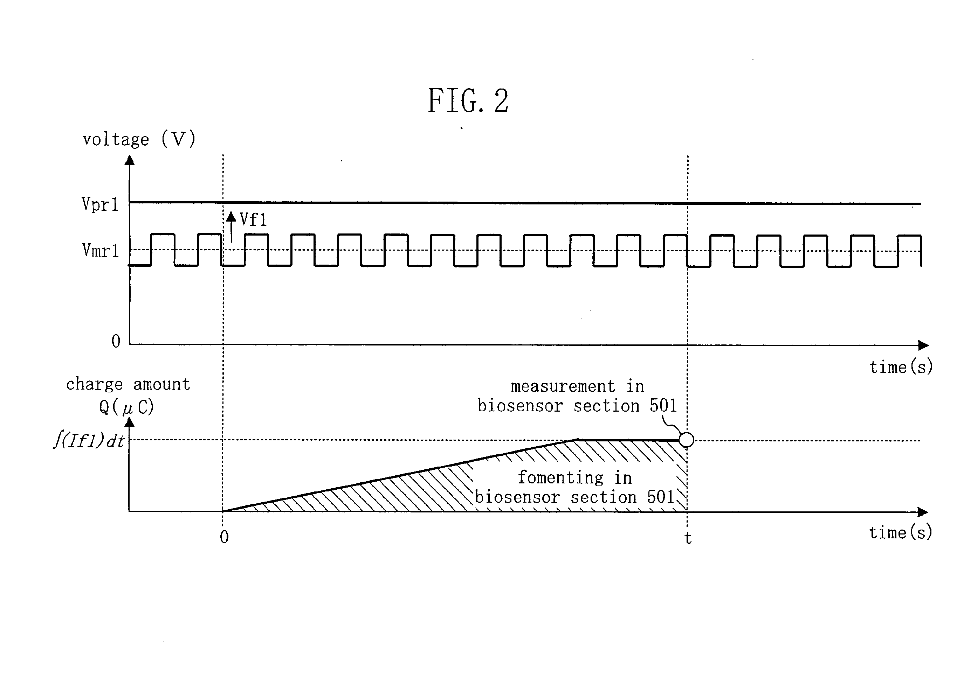

FIG. **1** is a block circuit diagram showing a biosensor device according Embodiment 1 of the present invention, and FIG. **2** is a chart showing the relationship between biosensor application voltage **Vf1** and a charge amount **Q** in the biosensor device according to the present embodiment.

The construction of the biosensor device of the present embodiment in FIG. **1** is almost the same as that of the conventional biosensor device shown in FIG. 25, wherein only the waveform of counter pole control voltage **Vmr1** that a reference voltage source 508 outputs is different therefrom.

Specifically, the biosensor device of the present embodiment includes a first biosensor section 501 that detects a to-be-measured component contained in a sample as a liquid and generates an electric signal, and a measuring circuit 509 for processing the electric signal generated in the first biosensor section 501. Further, the biosensor device of the present embodiment is provided with, through not shown, an analyzing circuit for analyzing data obtained in the measuring circuit 509, a display section for displaying a measured result or an analyzed result, and the like according to needs. The first biosensor section 501 may be disposable and detachable from the main body of the device, or a semiconductor chip on which the first biosensor section 501 and the measuring circuit are mounted may be disposable and detachable from the main body of the device.

The first biosensor section 501 includes a working pole (anode) 510 formed in a reaction chamber, a working pole terminal connected to the working pole 510, a counter pole (cathode) 511 facing the working pole 510 with an interval left for allowing the sample to flow therein, and a counter pole terminal connected to the counter pole 511, and a reaction reagent (not shown) made of an enzyme, a mediator, microbes, and the like according to the to-be-measured component is applied to the working pole 510 and the counter pole 511.

On the other hand, the measuring circuit 509 includes a working pole electrode 503 connected to the working pole 510 at measurement by means of a conductive wiring in the first biosensor section 501, a counter pole electrode 504 connected to the counter pole 511 at measurement by means of a conducive wiring, a first voltage source 505a having an ammeter and connected to the working pole electrode 503, a second voltage source 506 connected to the counter pole electrode 504, a reference voltage source 508 which supplies working pole control voltage Vpr1 to the first voltage source 505a and counter pole control voltage Vmr1 to the second voltage source 506, and a signal processing circuit 507 connected to the first voltage source 505a.

In the biosensor device of the present embodiment, similar to the conventional biosensor device, the working pole electrode 503 and the counter pole electrode 504 reference working pole control voltage Vpr1 and the counter pole control voltage Vmr1, respectively, which are generated in the reference voltage source 508. In other words, the working pole electrode 503 receives the same voltage as the working pole control voltage Vpr1 as voltage Vp1 from the first voltage source 505a while the counter pole electrode 504 receives the same voltage as the counter pole control voltage Vmr1 as voltage Vm1 from the second voltage source 506.

Different from the conventional biosensor device, in the biosensor device of the present embodiment, at least one of the counter pole control voltage Vmr1 and the working pole control voltage Vpr1, which are output from the reference voltage source 508, is not constant and varies chronologically, as shown in FIG. 2.

In the example shown in FIG. 2, the counter pole control voltage Vmr1 is biased at a constant voltage and modulated by a rectangular wave. Herein, the term "Vmr1 is biased at a constant voltage" means that the center value of Vmr1 is set at a constant voltage (direct current). Accordingly, the voltage Vm1 in the rectangular wave equivalent to the counter pole control voltage Vmr1 is applied to the counter pole electrode 504 at measurement. On the other hand, the working pole control voltage Vpr1 is set constant, and therefore, the voltage Vp1 of the working pole electrode 503 is at a constant value equivalent to the working pole control voltage Vpr1. At that time, biosensor application voltage Vf1, which is difference between the working pole control voltage Vpr1 and the counter pole control voltage Vmr1, is not limited in its range specifically.

Whereby, an electric field within the reaction chamber of the first biosensor section 501 is modulated to cause the blood component to be stirred electrically within the reaction chamber. As a result, the reaction with the reagent is accelerated even if the blood sample has high viscosity, suppressing lowering of a displayed level of the blood sugar.

It is noted that a circuit for formulating the rectangular wave can be fabricated easily by any known technique but is preferably a digital circuit for reducing a circuit area. Alternatively, such a circuit may output a waveform program stored in a memory or the like.

As described above, in the biosensor having the working pole and the counter pole in the biosensor device of the present embodiment, the constant voltage is applied to one of the working pole and the counter pole while the voltage modulated by the rectangular wave is applied to the other, thereby preventing decrease in the working pole current If1. The working pole current amount signal s517 output from the first voltage source 505a is processed in the signal processing circuit so that a concentration of the to-be-measured material is specified with higher precision and higher sensitivity than the conventional cases. Further, in the biosensor device of the present embodiment stirs the blood sample effectively, so that the reaction by an enzyme or the like is accelerated, reducing the measurement time. Fomenting period can be reduced to, for example, less than 10 seconds though it is not generally said.

It is noted that the blood sugar sensor is described as an example in the present embodiment but the to-be-measured material may be any substance only if it generates an electron in a selective reaction with a reagent such as an enzyme in a liquid sample. For example, appropriate selection of a reagent allows the biosensor device of the present embodiment to measure an oligonucleotide, glucose, an antigen, an enzyme, peptide, an antibody, a DNA fragment, an RNA fragment, a lactic acid, cholesterol, and the like. This is also applied to the following embodiments.

Further, the example in which the counter pole control voltage Vmr1 is in the rectangular wave is described above, but the same effects can be obtained by changing the working pole control voltage **Vpr1** into a rectangular wave or both of the counter pole control voltage **Vmr1** and the working pole control voltage **Vpr1** may be in a rectangular wave with the phases shifted from each other.

(Embodiment 2)

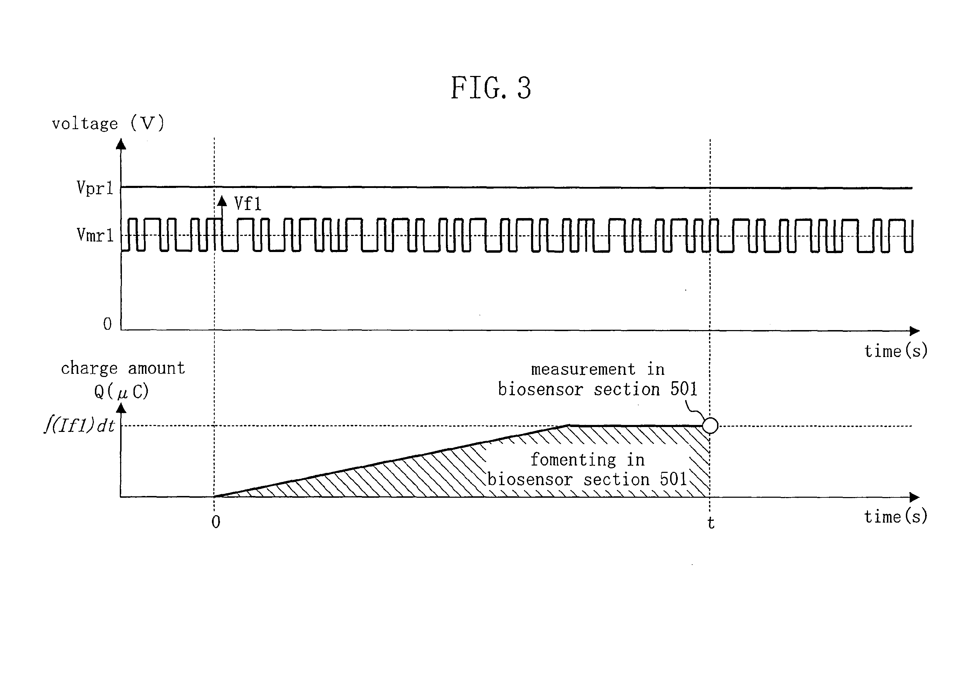

FIG. 3 is a chart showing the relationship between the biosensor application voltage **Vf1** and the charge amount **Q** in a biosensor device according to the present embodiment.

The biosensor device of the present embodiment is a modified example of Embodiment 1, its circuit construction is the same as that of the biosensor device of Embodiment 1 in FIG. 1, and therefore, the description is omitted. Wherein, in the biosensor device of the present embodiment, as shown in FIG. 3, the counter pole control voltage **Vmr1** of the counter pole electrode **504** is biased at a constant voltage and modulated by a spreading code. To the contrary, the working pole control voltage **Vpr1** is a constant voltage during a measurement period.

With the above construction, the electric field within the reaction chamber of the first biosensor section **501** is modulated to a wideband frequency spectrum, different from modulation by the rectangular wave in Embodiment 1, to cause the blood component to be stirred electrically and randomly in the reaction chamber. As a result, the blood sample can be stirred regardless the size of the particulates contained in the blood, accelerating the glucose reaction with the reagent and suppressing lowering of a displayed level of the blood sugar even if the blood sample has high viscosity. Hence, the measurement can be performed highly accurately and highly sensitively. Further, the measured result becomes immune to variation in blood viscosity caused due to difference in physical condition, so that an error in measured value can be reduced. In addition, in the biosensor device of the present embodiment, the constant voltage and the voltage modulated by the spreading code are applied to the working pole and the counter pole of the biosensor, respectively, to cause the blood sample to be stirred effectively, enabling reduction in measurement time.

It is noted that a circuit for modulating the constant voltage by the spreading code can be composed easily by a known digital or analog circuit.

Moreover, in the biosensor device of the present embodiment, the same effects as described above can be obtained also when the working pole control voltage **Vpr1** is modulated by a spreading code or when both the counter pole control voltage **Vmr1** and the working pole control voltage **Vpr1** are modulated by a spreading code.

(Embodiment 3)

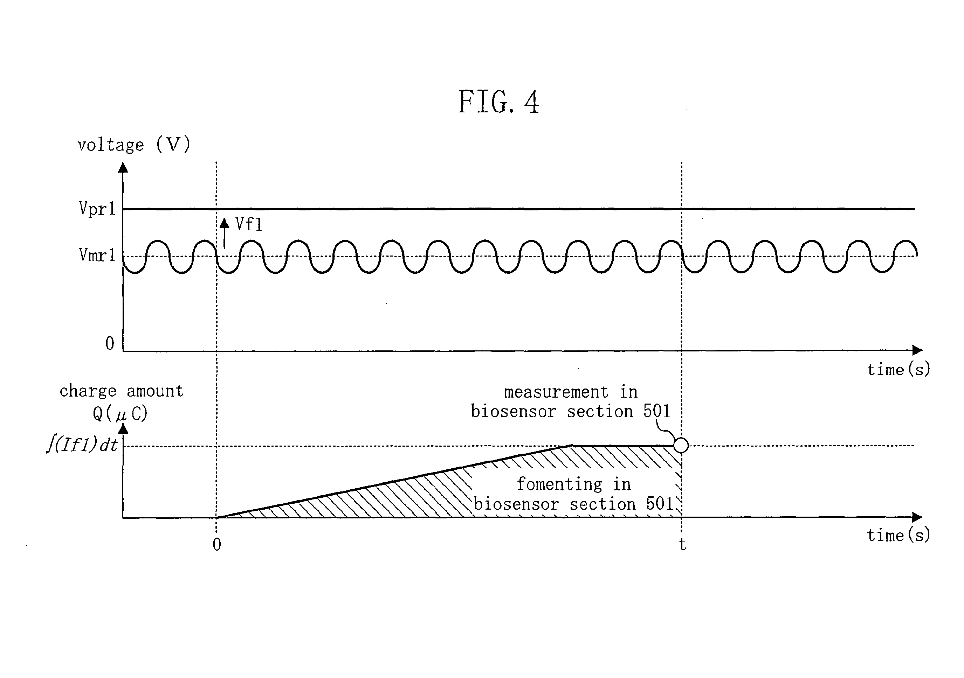

FIG. **4** is a chart showing the relationship between the biosensor application voltage **Vf1** and the charge amount **Q** in a biosensor device according to Embodiment 3 of the present invention. The biosensor device of the present embodiment has the same circuit construction as those of the biosensor devices of Embodiments 1 and 2 in FIG. 1, and therefore, the description of the construction is omitted while the reference numerals of the members are referenced to FIG. **1.**

As shown in FIG. **4,** one of significant features of the biosensor device of the present embodiment lies in that the counter pole control voltage **Vmr1 (=Vm1)** biased at a constant voltage and modulated by a sine wave is applied to the counter pole electrode **504** while the working pole control voltage **Vpr1** (=**Vp1**) applied to the working pole electrode **503** is constant. Accordingly, the biosensor application voltage **Vf1** varies in a cycle of the sine wave of **Vmr1.** The sine wave is generated by a known sine wave generating circuit provided within the reference voltage source **508.**

With the above construction, the electric field within the reaction chamber of the first biosensor section **501** is modulated at a single frequency of the sine wave, so that a substance of which eigenfrequency is the same as the frequency of the sine wave in the blood components is stirred in the reaction chamber electrically. When the frequency of the counter pole control voltage **Vmr1** is allowed to agree with the eigenfrequency of the particulates such as blood cells, platelets, and the like or with the eigenfrequency of the to-be-measured material, the blood sample is stirred to accelerate the reaction of the to-be-measured material with the reagent. Herein, the eigenfrequency of the particulates is an audible frequency below a few tens of kHz while the eigenfrequencies of the to-be-measured materials such as glucose are ultrasonic frequencies (MHz levels). Therefore, it is especially preferable that the frequency of the sine wave agree with that of the particulates in the blood in view of cost reduction and size reduction.

In consequence, more accurate measurement can be performed while the lowering of a displayed level of the blood sugar is suppressed even if the blood sample has high viscosity. Further, the measurement of the to-be-measured material can be performed more swiftly than the conventional cases, attaining reduction in measurement time.

It is noted that in the biosensor device of the present embodiment, when the working pole current **If1** flows between the working pole **510** and the counter pole **511,** the working pole current amount signal **s517** is sent accordingly from the first voltage source **505a** having the ammeter to allow the signal processing circuit 507 to perform processing, thereby determining a blood sugar level.

As described above, in the biosensor device of the present embodiment, the voltage biased at the constant voltage and modulated by the sine wave is applied between the working pole **510** and the counter pole **511** of the biosensor section **510,** thereby reducing the measurement time and attaining high precision.

Furthermore, in the biosensor device of the present embodiment, the same effects as described above can be obtained also even if the working pole control voltage **Vpr1** is modulated by the sine wave or both the counter pole control voltage **Vmr1** and the working pole control voltage **Vpr1** are modulated by the sine wave with the phases shifted from each.

(Embodiment 4)

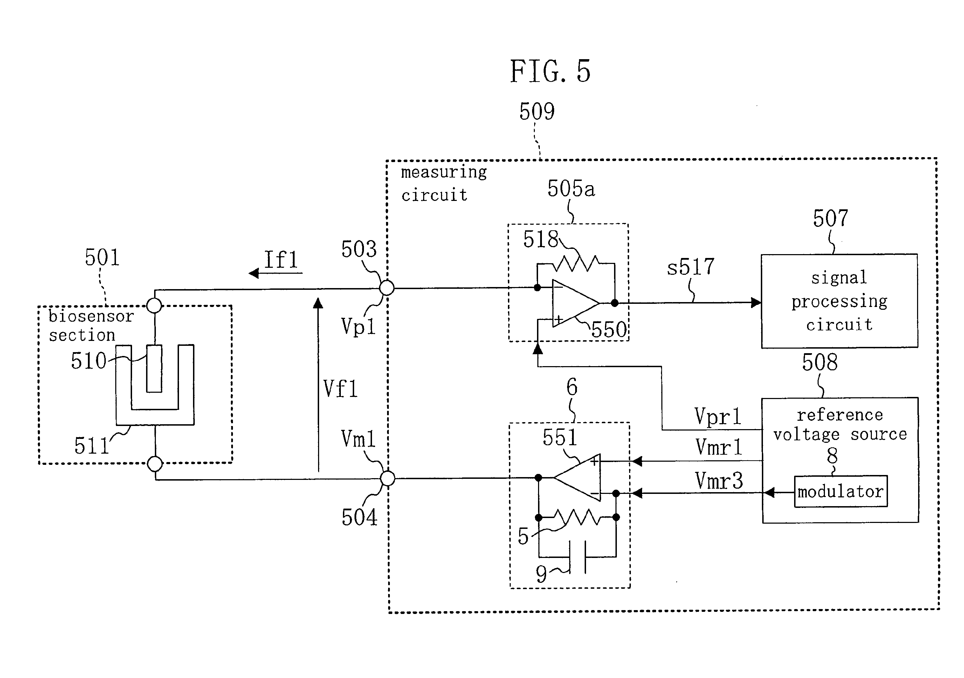

Fig. 5 is a block circuit diagram showing a biosensor device according to Embodiment 4 of the present invention.

In the biosensor device of the present embodiment, as shown in the drawing, the first voltage source **505a** having the ammeter, the second voltage source **506,** and the reference voltage source **508** in the biosensor device of Embodiment 3 have concrete circuit constructions.

In the biosensor device of the present embodiment, voltage modulated by the sine wave is generated by series connection of a $\Delta\Sigma$ (delta sigma) modulator **8** provided in the reference voltage source **508** and a low-pass-filter-equipped voltage source **6.**

The first voltage source **505a** is composed of: an operational amplifier **550** whose (+) side input part receives the working pole control voltage **Vpr1** at measurement and whose (-) side input part is connected to the working pole electrode 503; and a feedback resistor **518** arranged between the output part and the (-) side input part of the operational amplifier **550.**

The low-pass-filter-equipped voltage source **6,** which corresponds to the second voltage source **506** in FIG. 1, is composed of: an operational amplifier **551** whose (+) side input part and (-) side input part receive the counter pole control voltage **Vmr1** and second counter pole control voltage **Vmr3** at measurement, respectively, and whose output part is connected to the counter pole electrode **504;** a feedback resistor 5 arranged between the (-) side input part and the output part of the operational amplifier **551;** and a capacitor **9** arranged between the (-) side input part and the output part of the operational amplifier **551** so as to be connected in parallel with the feedback resistor **5.**

In the biosensor device of the present embodiment, the low-pass-filter-equipped voltage source 6 to which the second counter pole control voltage **Vmr3** in the sine wave singal and the counter pole control voltage **Vmr1** are input generates the sine wave to be applied to the counter pole electrode **504.**

With the above arrangement, the sine wave in the biosensor device of Embodiment 3 can be generated using a digital circuit, attaining stable frequency and easy frequency exchange. Further, the sine wave can be generated by a circuit having a smaller area than that of an analog circuit.

As described above, in the biosensor device of the present embodiment, the voltage, which is biased at the constant voltage, is modulated by the sine wave, and is generated in master-slave connection of the $\Delta\Sigma$ modulator and the low-pass filter circuit, is applied between the working pole and the counter pole of the biosensor (section), thereby attain reduction in measurement time, high test precision, and size reduction of the device.

(Embodiment 5)

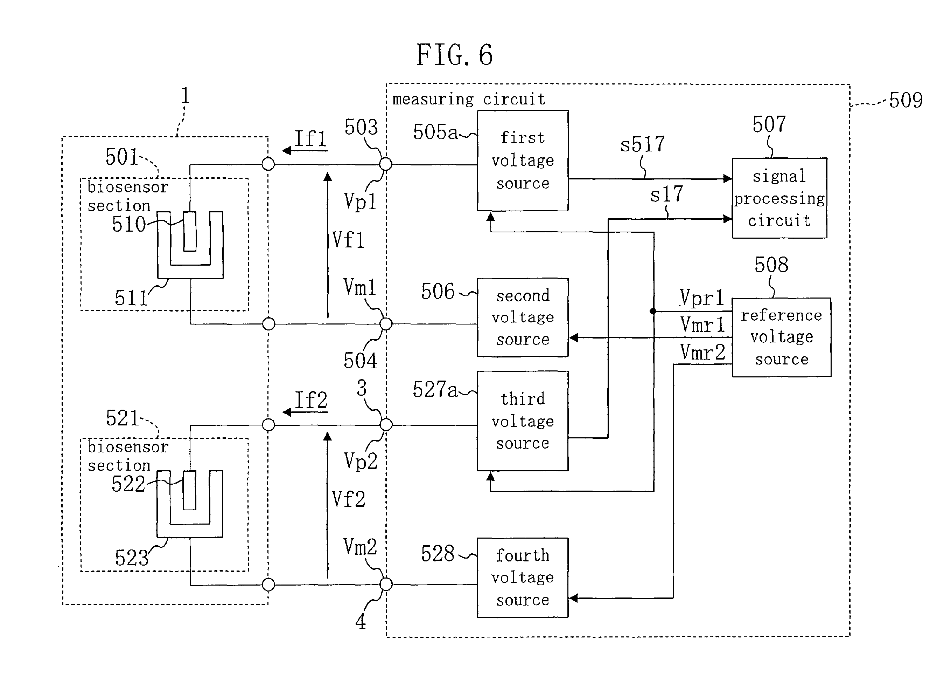

FIG. **6** is a circuit diagram showing a biosensor device according to Embodiment 5 of the present invention.

In the biosensor device of the present embodiment in the drawing, a biosensor **1** is provided with two biosensor sections (a first biosensor section **501** and a second biosensor section **521)** having the same function. In detail, the biosensor **1** includes the first biosensor section **501** having the same construction as those in Embodiments 1 to 4 and the second biosensor **521** having a working pole **522** and a counter pole **523** facing the working pole **522.** Wherein, description of the overlapping members with those in the biosensor devices of Embodiment 1 to 4 is omitted.

In the measuring circuit **509,** there are provided a third voltage source **527a** connected to the working pole **522** via the working pole electrode 3 and a fourth voltage source **528** connected to the counter pole **523** via the counter pole electrode **4,** in addition to the first voltage source **505a** and the second voltage source **506.**

Likewise the first voltage source **505a,** the working pole control voltage **Vpr1** is applied to the third voltage source 527a so that voltage **Vp2** equivalent to the working pole control voltage **Vpr1** is applied to the working pole electrode **503.**

$$Vp2 = Vpr1 \qquad \dots (5)$$

Similar to the first voltage source **505a,** the third voltage source **527a** has an ammeter so that a working pole current amount singal **s17** corresponding to the level of a second working pole current **If2** flowing between the working pole **522** and the counter pole **523** at measurement is output to the signal processing circuit **507.** The fourth voltage source **528** receives third counter pole control voltage **Vmr2** from the reference voltage source **508** and applies to the counter pole electrode **4** voltage **Vm2** equivalent to the third counter pole control voltage **Vmr2.**

$$Vm2=Vmr2 \quad \dots (6)$$

Accordingly, biosensor application voltage **Vf2**, which is differential voltage between the working pole control voltage **Vpr1** and the third counter pole control voltage **Vmr2,** is applied to the additional second biosensor section **521.**

$$Vf2=Vp2-Vm2=Vpr1-Vmr2 \quad \dots (7)$$

Upon application of a blood sample to the additional second biosensor section **521** under the above condition, a reaction with a reagent starts to cause the working pole current **If2** to be generated. The third voltage source **527a** measures the thus generated working pole current **If2** and the singal processing circuit processes the working pole current amount signal **s17** as the measured result, leading out a blood sugar level.

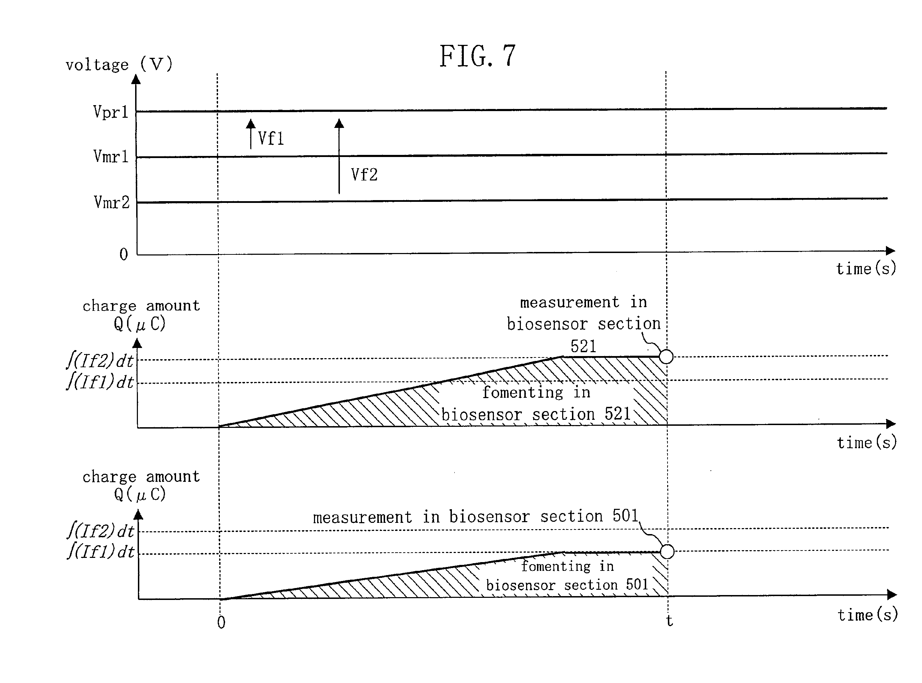

FIG. 7 is a chart chronologically showing one example of measurement operation of the biosensor device of the present embodiment in FIG. **6.** Wherein, the (first) counter pole control voltage **Vmr1** is set greater than the third counter pole control voltage **Vmr2.**

$$Vmr1>Vmr2 \quad \dots (8)$$

Namely:

$$Vf1<Vf2 \quad \dots (9)$$

The voltage graph indicated at the upper part of FIG. 7 shows that the biosensor application voltage **Vf2**, which is the differential voltage between the working pole control voltage **Vpr1** and the third counter pole control voltage **Vmr2,** is applied to the additional second biosensor section 521 in blood sugar measurement. The charge graph indicated at the lower part of FIG. 7 shows time variation in integrated value of the working pole current **If2** in relation to blood sugar level.

$$\text{Charge amount } Q=\int(If2)dt \quad \dots (10)$$

Upon application of the blood sample at the time t (=0(s)), the reaction with the reagent starts. In association therewith, generation of charge starts. After blood sugar is exhausted, the reaction stops and no charge is generated. By measuring the charge amount **Q** at the time thereafter, a blood sugar level is determined.

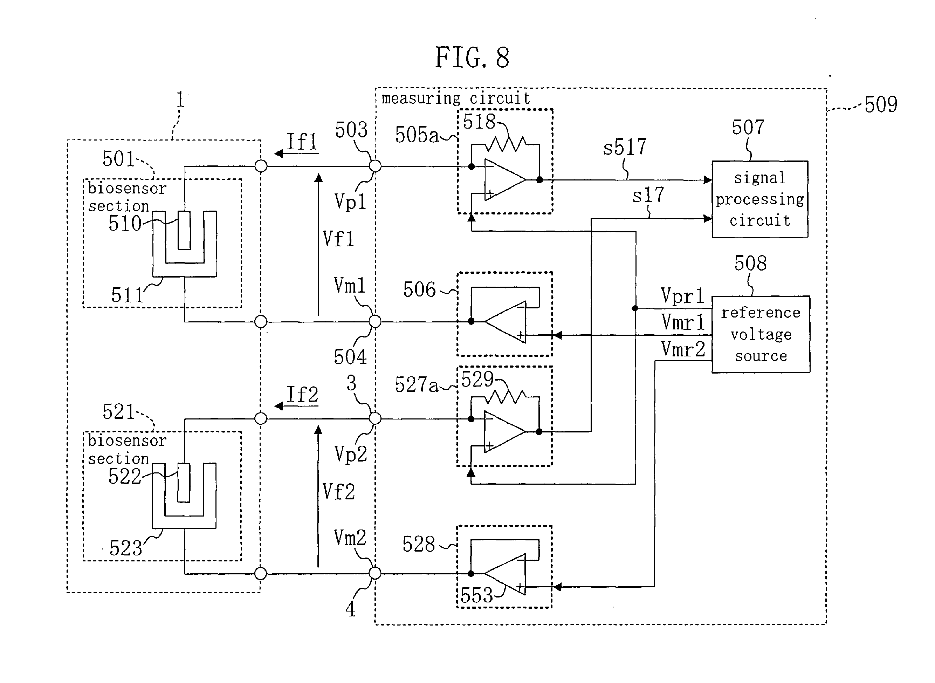

FIG. **8** is a block circuit diagram showing an example of circuit constructions of the first voltage source **505a,** the second voltage source **506,** the third voltage source **527a,** and the fourth voltage source 528 in the biosensor device of the present embodiment in FIG. **6.** In the example shown in the drawing, the third voltage source **527a** has the same construction as the first voltage source **505a** in which the operational amplifier **552** is negative-feedbacked by the feedback resistor **529.** The fourth voltage source **528** has the same construction as the second voltage source **506** in which the operational amplifier **553** is in a null-amplifier structure.

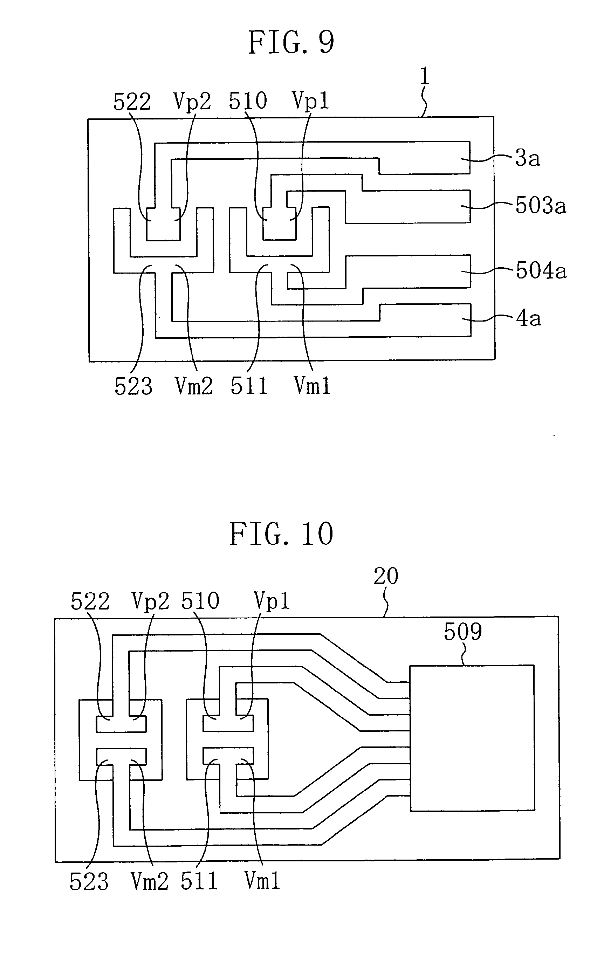

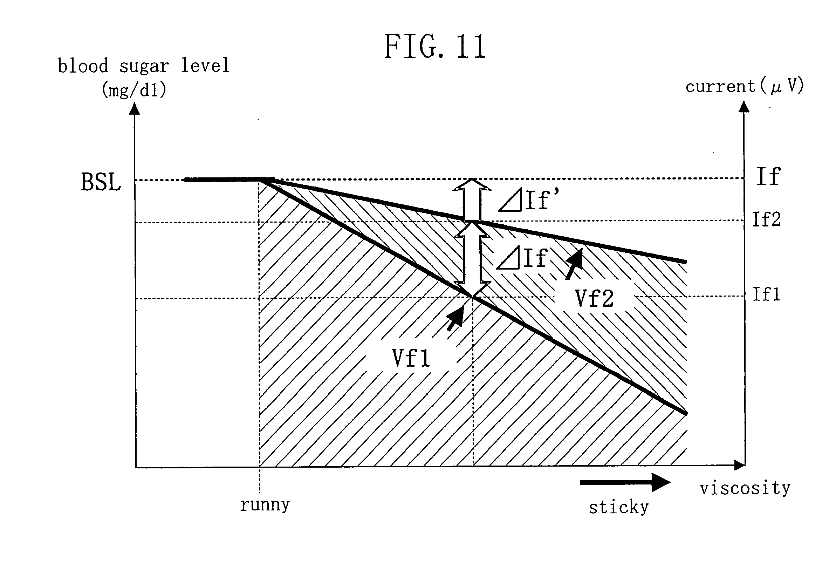

FIG. **9** is a plan view showing a constitutional example of the biosensor **1** of the present embodiment. The biosensor 1 is detachable from the main body generally. FIG. **10** is a view showing a constitutional example of a biosensor chip **20** on which the biosensor **1** and the measuring circuit **509** are formed. Also, FIG. **11** is a performance graph of a conventional single biosensor shown in FIG. **30** into which the principle of the present invention is remarked. The operation of the biosensor device of the present embodiment will be described further below with reference to the drawings.

Wherein, the biosensor 1 includes a working pole terminal **3a** for connection to the working pole electrode **3,** a working pole terminal **503a** for connection to the working pole electrode **503,** a counter pole terminal **504a** for connection to the counter pole electrode **504,** and a counter pole terminal 4a for connection to the counter pole electrode **4.**

As shown in FIG. 7, difference between the working pole currents **If** is caused due to difference among the biosensor application voltages when the sample blood has an arbitrary viscosity. Specifically, if the viscosity of the sample is high, the measured value obtained from the charge amount **Q** approximates more to a true measured value as the biosensor application voltage becomes larger.

$$\Delta If = If2 - If1 \qquad \dots (11)$$

The differential current $\Delta$**If** corresponds to the viscosity necessarily as shown in FIG. 7, and therefore, a current correction value $\Delta$**If'** according to the blood viscosity for an expected blood sugar level BSL is determined necessarily.

Thus, when the different biosensor application voltages are applied to the two biosensors and influence of the blood viscosity is corrected according to data of the measured two blood sugar levels, an expected accurate sugar blood level can be lead out.

As described above, the biosensor device of the present embodiment is provided with the plurality of biosensors each having the working pole and the counter pole, and the signal processing circuit that specifies a concentration of a to-be-measured material from a current value obtained by measuring the currents flowing from the working poles when desired different voltages are applied between the working poles and the counter poles of the plurality of biosensors. With this construction, high precision is attained. In this way, even if the biosensor application voltage is not changed in one biosensor section, more accurate and more precise measurement of a to-be-measured material than the conventional cases can be performed by applying different biosensor application voltages to the plurality of biosensor sections.

It is noted that the circuits composing the first voltage source **505a,** the second voltage source **506,** the third voltage source **527a,** and the fourth voltage source **528** are not limited to those shown in FIG. **8.**

Further, as shown in FIG. **9,** the biosensor **1** of the biosensor device of the present embodiment may be of detachable disposable type. This prevents contamination by a sample that has been previously measured.

Moreover, as shown in **FIG. 10,** the measuring circuit **509** and the biosensor **1** may be formed on one chip so as to be detachable from the main body. Generally, the measuring circuit **509** is an exclusive circuit used for one kind of to-be-measured material. Therefore, incorporation of the measuring circuit **509** to a disposable chip enables common use of the main body of the device (a portion of the biosensor device from which the biosensor chip and the biosensor are excluded) to a plurality of biosensor chips for measuring different materials.

(Embodiment 6)

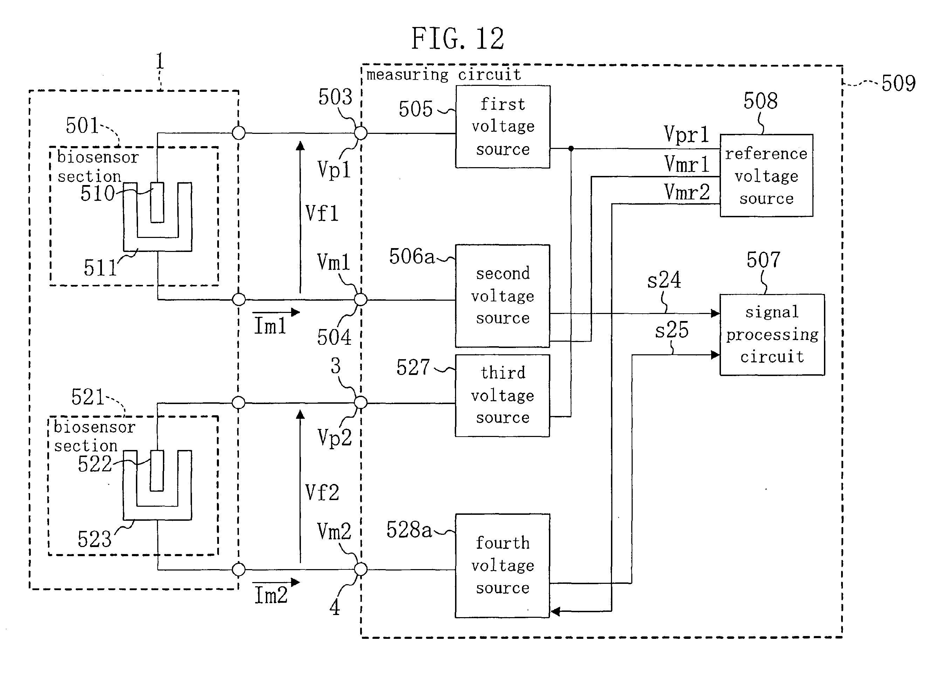

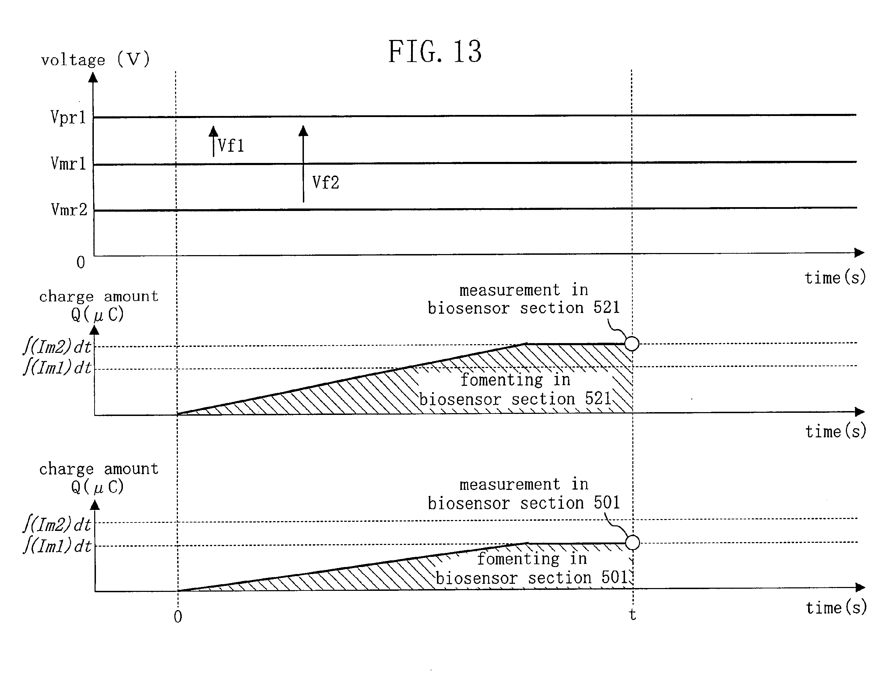

FIG. **12** is a block circuit diagram showing a biosensor device according to Embodiment 6 of the present invention, and FIG. **13** is a chart chronologically showing one example of measurement operation of the biosensor device of the present embodiment in FIG. **12.**

As shown in FIG. **12,** the biosensor device of the present embodiment has a construction in which the functions of the working pole electrodes and the counter pole electrodes are exchanged in comparison with the biosensor device of Embodiment 5 shown in FIG. **6.**

In detail, a second voltage source **506a** and a fourth voltage source **528a** each include an ammeter, and the reference voltage source **508** supplies the working pole control voltage **Vpr1** to a first voltage source **505** and a third voltage source **527** and supplies the counter pole control voltage **Vmr1** and third counter pole control voltage **Vmr2** to the second voltage source **506a** and the fourth voltage source **528a,** respectively.

The voltage **Vp1** of the working pole electrode **503** and the voltage **Vp2** of the working pole electrode **3** become equivalent to the working pole control voltage **Vpr1** through the first voltage source **505** and the third voltage source **527,** respectively.

$$Vp1 = Vp2 = Vpr1 \qquad \dots (12)$$

Also, the voltage **Vm1** of the counter pole electrode **504** becomes equivalent to the counter pole control voltage **Vmr1** through the second voltage source **506a,** and the voltage **Vm2** of the counter pole electrode **4** becomes equivalent to the counter pole control voltage **Vmr2** through the fourth voltage source **528a.**

$$Vm1=Vmr1 \quad \dots (13)$$

$$Vm2=Vmr2 \quad \dots (14)$$

Accordingly, the biosensor application voltage **Vf1** and the biosensor application voltage **Vf2** become as follow.

$$Vf1=Vp1-Vm1=Vpr1-Vmr1 \quad \dots (15)$$

$$Vf2=Vp2-Vm2=Vpr1-Vmr2 \quad \dots (16)$$

Namely, the biosensor application voltages **Vf1, Vf2** are the same as those in Embodiment 5 described above.

Upon application of a blood sample to the biosensor **1** under the above condition, the blood is in contact with a reagent to start reacting. Then, generation of the counter pole current **Im1** and the counter pole current **Im2** starts. The second voltage source **506a** having the ammeter measures the counter pole current **Im1** and outputs the counter pole current amount signal **s24** as a measured result to the signal processing circuit 507. At the same time, the fourth voltage source **528a** measures the counter pole current **Im2** and outputs the counter pole current amount signal **s25** as a measured result to the signal processing circuit **507**. The signal processing circuit **507** computes the counter pole current amount signal **s24** and the counter pole current amount signal **s25** to determine a blood sugar level.

In measurement by the biosensor device of the present embodiment, as shown in FIG. **13,** the working pole control voltage **Vpr1,** the counter pole control voltage **Vmr1,** and the third counter pole control voltage **Vmr2** are set constant during the measurement, for example.

The graph about the charge in FIG. 13 indicates time variation of respective integrated values of the counter pole current **Im1** and the counter pole current **Im2** in relation to blood sugar level.

$$\text{Charge amount } Q=\int(Im1)dt \quad \dots (17)$$

$$\text{Charge amount } Q=\int(Im2)dt \quad \dots (18)$$

As described above, in the case where a sample has a given viscosity, the charge amount **Q** is determined necessarily according to the biosensor application voltage, and therefore, a measured value can be determined from a measured result of the first biosensor section **501** and a measured result of the second biosensor section **521,** likewise Embodiment 5.

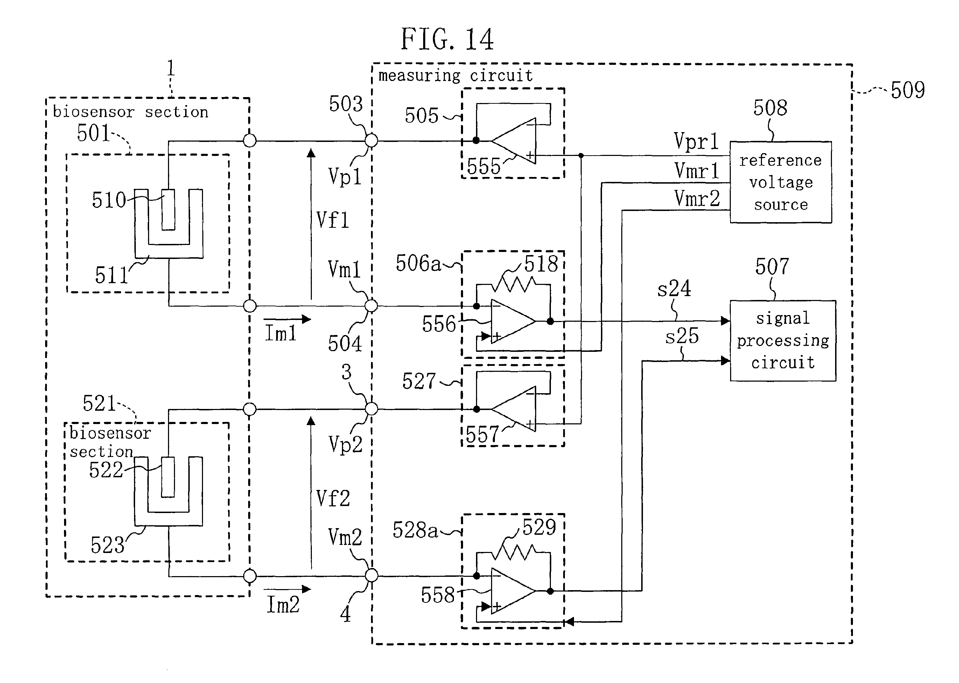

FIG. 14 is a block circuit diagram showing a constitutional example of circuits of the first to fourth voltage sources in the biosensor device of the present embodiment in FIG. **12**. In the example shown in the drawing, the first voltage source **505** is an operational amplifier **555** having an output part connected to the working pole electrode **503** and a (-) side input part of its own and a (+) side input part connected to the reference voltage source **508**. The third voltage source **527** is an operational amplifier 557 having an output part connected to the working pole electrode **3** and a (-) side input part of its own and a (+) side input part connected to the reference voltage source **508**. The second voltage source **506a** is composed of an operational amplifier 565 having a (+) side input part connected to the reference voltage source **508** and a (-) side input part connected to the counter pole electrode **504** and a feedback resistor **518** arranged between an output part and the (-) side input part of the operational amplifier **556**. The fourth voltage source **528a** is composed of an operational amplifier **558** having a (+) side input part connected to the reference voltage source **508** and a (-) side input part connected to the counter pole electrode **4** and a feedback resistor **529** arranged between an output part and the (-) side input part of the operational amplifier **558**.

With the above construction, which measures a to-be-measured material through the voltage sources connected to the counter pole electrodes, highly precise measurement is enabled as well as the biosensor devices in Embodiments 1 to 5.

(Embodiment 7)

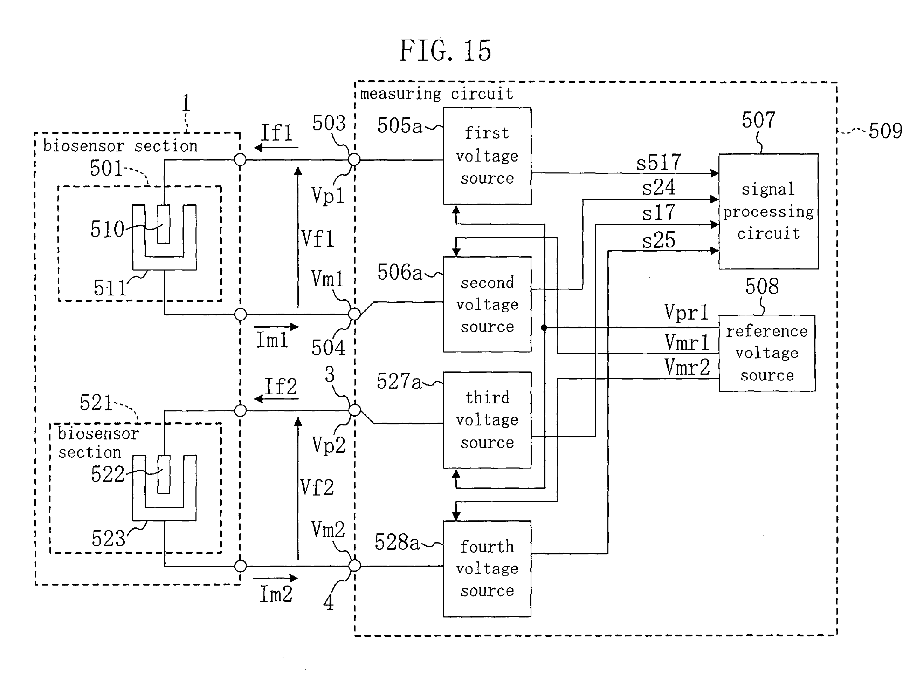

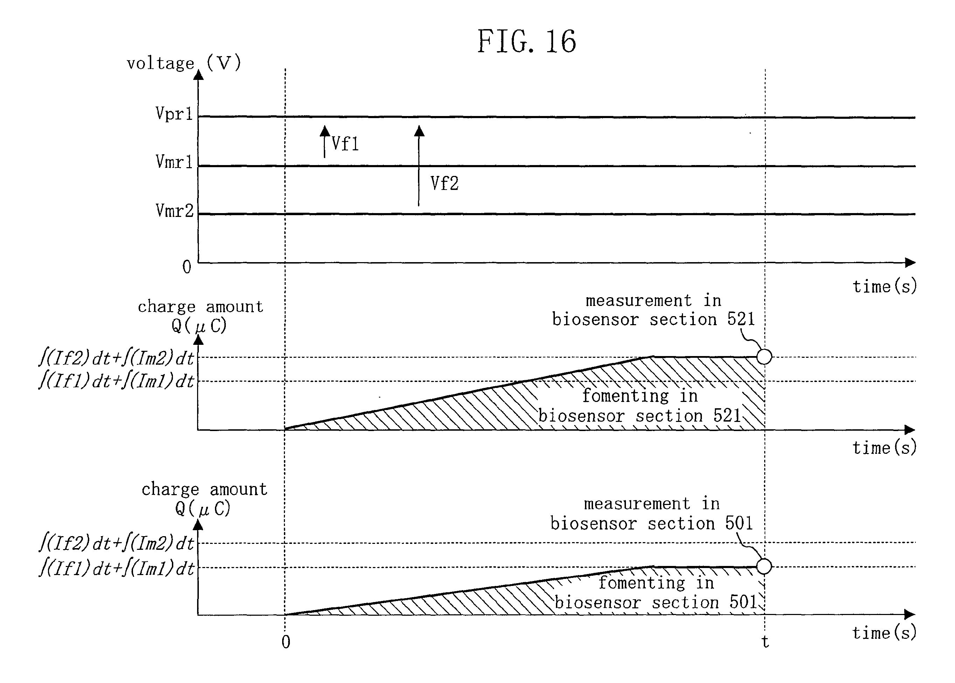

FIG. **15** is a block circuit diagram showing a biosensor device according to Embodiment 7 of the present invention, and FIG. **16** is a chart chronologically showing one example of measurement operation of the biosensor device of the present embodiment in FIG. **15.**

As shown in FIG. **15,** one of significant features of the biosensor device of the present embodiment lies in that an ammeter is provided in each of voltage sources respectively connected to two working pole electrodes and voltage sources connected respectively to two counter pole electrodes. The other construction is the same as that in the biosensor device of Embodiment 5 or Embodiment 6, and the description thereof is omitted.

In the biosensor device of the present embodiment, when a blood sample is applied to the biosensor 1, a reaction with a reagent starts. In association therewith, generation of working pole currents **If1, If2** and counter pole current **Im1, Im2** starts. The first voltage source **505a** and the third voltage source **527a** each having the ammeter measure the working pole currents **If1** and **If2,** respectively, and output working pole current amount signals **s517** and **s17** as measured results, respectively, to the signal processing circuit 507. At the same time, the second voltage source 506a and the fourth voltage source 528a each having the ammeter measure the counter pole currents **Im1** and **Im2,** respectively, and output counter pole current amount signals **s24** and **s25** as measured results, respectively, to the signal processing circuit **507.** Then, the signal processing circuit **507** computes the working pole currents **If1, If2** and the counter pole currents **Im1, Im2** to determine an amount of the to-be-measured material such as a blood sugar level.

Next, the measurement operation will be described with reference to FIG. **16.**

In the example shown in FIG. **16,** as indicated at the upper part thereof, the working pole control voltage **Vpr1,** the counter pole control voltage **Vmr1,** and the third counter pole control voltage **Vmr2** are constant during measurement, wherein **Vpr1>Vmr1>Vmr2.**

The charge graphs indicated at the middle part and the lower part of FIG. 16 show time variations in integrated values obtained by integrating the working pole currents **If1, If2** and the counter pole currents **Im1, Im2** in relation to blood sugar level, in each biosensor section.

$$\text{Charge amount } Q = \int (If1)dt + \int (Im1)dt \quad \dots (19)$$

$$\text{Charge amount } Q = \int (If2)dt + \int (Im2)dt \quad \dots (20)$$

Likewise Embodiments 5 and 6, a measured value of the to-be-measured material is obtained from a charge amount **Q** measured in the first biosensor section **501** and a charge amount **Q** measured in the second biosensor section **521.**

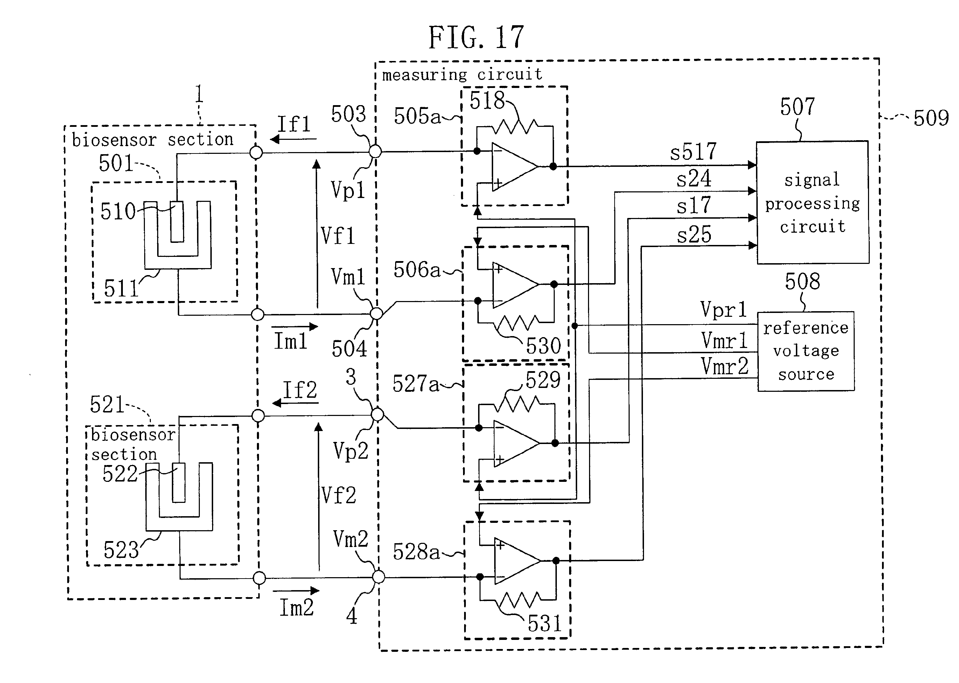

FIG. **17** is a block circuit diagram showing a constitutional example of circuits of the first to fourth voltage sources in the biosensor device of the present embodiment in FIG. **15.** The first to fourth voltage sources have the same construction as the first voltage source **505a** in Embodiment 6. Wherein, this is one example of the circuits of the voltage sources and other circuits may compose the voltage sources.

In the biosensor device of the present embodiment, different biosensor application voltages are applied to the two biosensor sections, and influence of the blood viscosity is corrected according to data of four blood sugar levels of two values at the working poles and two values at the counter poles, to lead out an accurate expected blood sugar level. Especially, the biosensor device of the present embodiment offers blood sugar data two times greater than that in the biosensors in Embodiments 5 and 6, resulting in two-time increase in precision.

As described above, the biosensor device of the present embodiment is provided with the plurality of biosensors each having the working pole and the counter pole and the signal processing circuit that specifies a concentration of a to-be-measured material from measured current values of the currents flowing out from the working pole electrode and the currents flowing into the counter pole electrode when the desired voltages are applied between the working poles and the counter poles of the respective plurality of biosensors. Hence, high precision is attained.

(Embodiment 8)

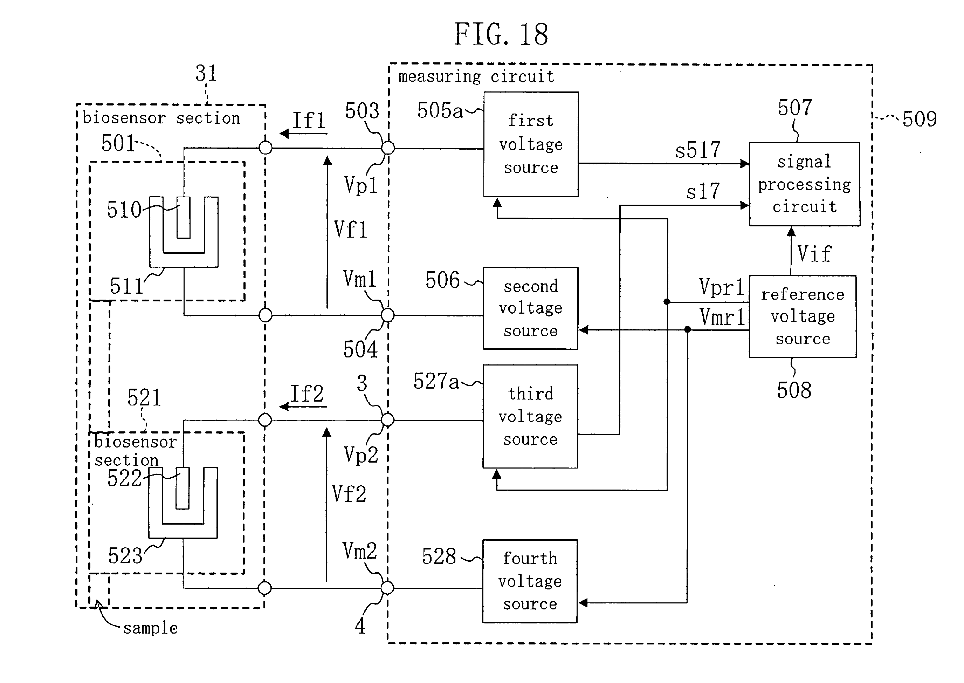

FIG. **18** is a block circuit diagram showing a biosensor device according to Embodiment 8 of the present invention.

As shown in the drawing, the biosensor device of the present embodiment is so composed that the reaction chamber of the first biosensor section 501 and the reaction chamber of the second biosensor section **521** in the biosensor device of Embodiment 5 in FIG. **6** are connected with each other by means of a capillary. The first biosensor section **501** and the second biosensor section **521** have electrodes which are the same in size and shape, and have the same functions.

In the measuring circuit **509,** comparison reference voltage Vif is supplied to the signal processing circuit **507** from the reference voltage source **508.**

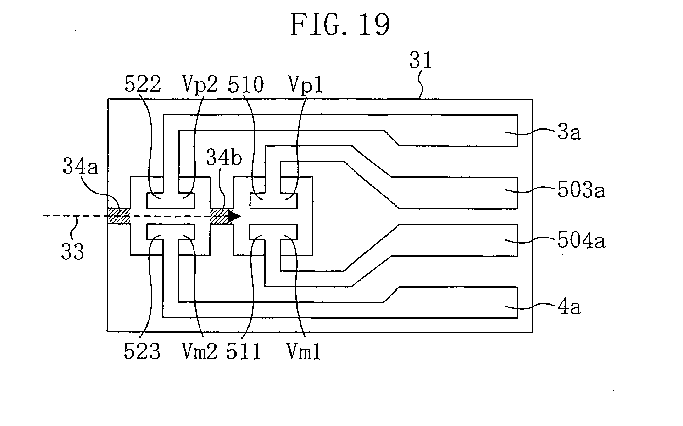

FIG. **19** is a plan view schematically showing a biosensor 31 of the biosensor device of the present embodiment in FIG. **18.** As shown in the drawing, the first biosensor section 501 and the second biosensor section **521** are connected to a sample application spot (a part to which a sample is to be applied) of the biosensor device vertically (in series) by means of capillaries. A blood sample (humor **33**) spot-applied on the sample application spot passes through a capillary **34a,** reaches the reaction chamber of the second biosensor section **521,** and then, reaches the reaction chamber of the first biosensor section **501** through a capillary **34b.** The measurement principle of the biosensor device of the present embodiment will be described next.

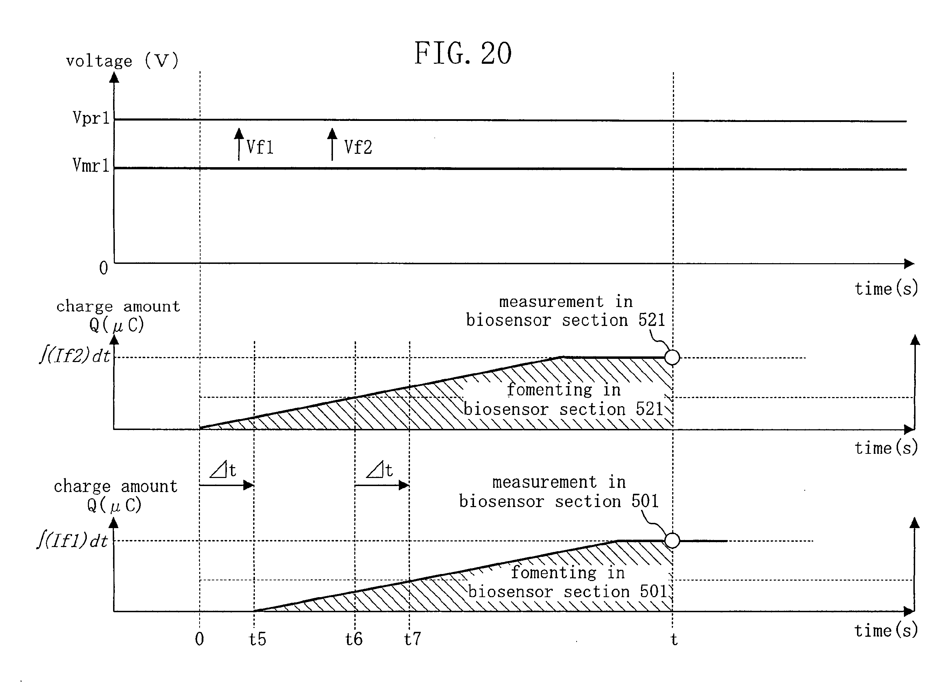

FIG. 20 is a chart chronologically showing one example of measurement operation of the biosensor device of the present embodiment in FIG. **18.** Herein, as shown in the drawing, the working pole control voltage **Vpr1** and the counter pole control voltage **Vmr1,** which are constant during measurement, are supplied to the working pole terminals and the counter pole terminals of the biosensor sections, respectively.

As shown at the middle part and the lower part of FIG. **20,** the biosensor device of the present embodiment requires time $\Delta t$ from the time when the blood sample reaches the reaction chamber of the second biosensor section **521** to the time when the blood sample reaches the reaction chamber of the first biosensor section **501.** This required time depends on the phenomenon that speed of blood transferring through a capillary varies depending on the viscosity of the sample. In detail, the speed of blood transferring through a capillary becomes lower as the viscosity of the sample is higher. Accordingly, if the relationship between the viscosity and the transfer speed in a capillary is known in advance, a blood viscosity can be determined by measuring difference $\Delta t$ in arrival time of the blood sample to the two biosensor sections. Further, when a blood sugar level correction amount $\Delta If'$ according to the thus obtained blood viscosity value is added to an actual measured value, likewise Embodiment 5, an accurate blood sugar level can be determined.

It is noted that the size or the cross section of the capillary **34b** connected to the first biosensor section **501** and the capillary **34a** connected to the second biosensor section **521** may be equal to each other or may be different from each other. Wherein, the size of the capillaries **34a, 34b** are preferable to be equal to each other at any part for easily calculating a viscosity.

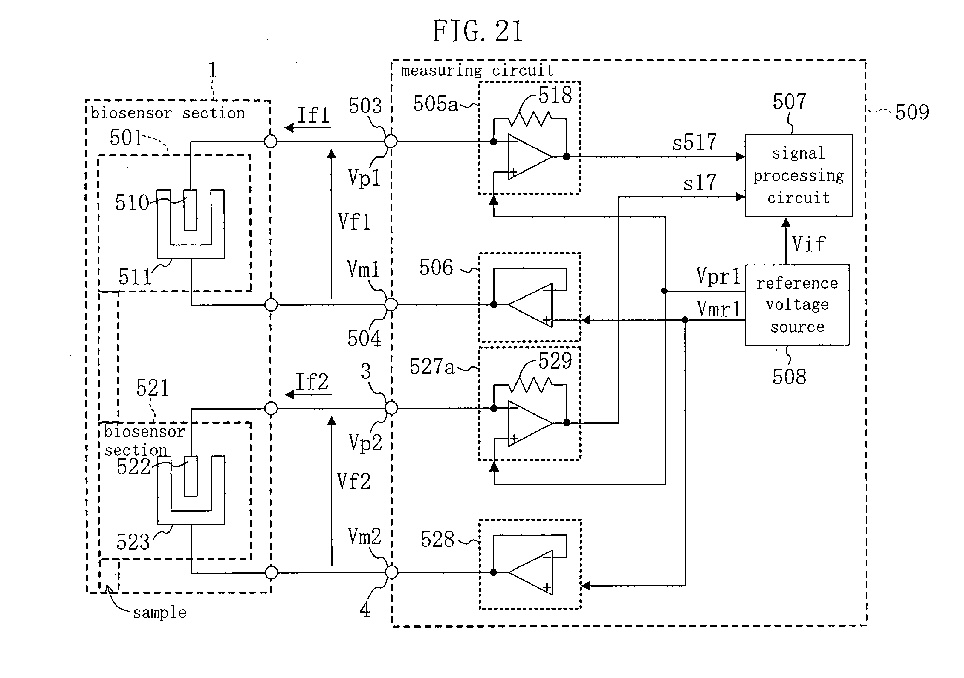

FIG. **21** is a block circuit diagram showing one example of circuit constructions of the first to fourth voltage sources of the biosensor device of the present embodiment in FIG. **18.**

As described above, in the biosensor device of the present embodiment, the plurality of biosensor sections are connected in series to the sample application spot by means of the capillaries having the same piping configuration in any of the biosensor devices described in Embodiments 5 to 7. Hence, a viscosity value of a sample can be corrected, attaining a highly precise measured value. Also, incorporation of the method for correcting the viscosity of a sample according to measured values of the plurality of biosensor sections attains further reliable measurement.

(Embodiment 9)

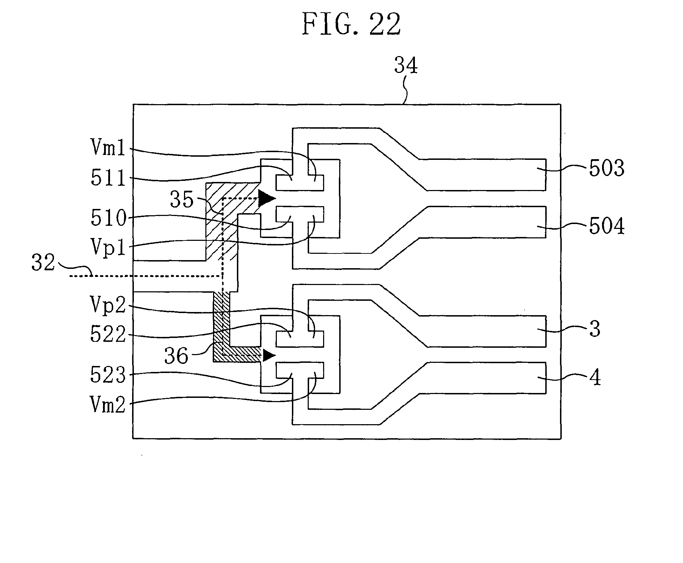

FIG. **22** is a plan view showing a biosensor according to Embodiment 9 of the present invention. As shown in the drawing, a biosensor **34** of the present embodiment has a construction in which two biosensor sections having the same characteristics are connected in parallel with each other by means of capillaries different in width.

The same measuring circuit as the measuring circuit 509 of the aforementioned biosensor device in Embodiment 8 is used in a biosensor device using the biosensor 34 of the present embodiment. Only the characteristics of the biosensor of the present embodiment will be described.

In the biosensor **34** of the present embodiment, a capillary **35** for supplying a sample to the first biosensor section having the working pole **510** and the counter pole **511** has larger width and larger cross section than a capillary **36** for supplying the sample to the second biosensor section having the working pole **522** and the counter pole **523.**

In general, the phenomenon that speed of liquid transferring through a capillary varies depending on the width of the capillary is known. The biosensor **34** utilizes this phenomenon for measuring a to-be-measured material. Specifically, in the biosensor device including the biosensor of the present embodiment, arrival time difference $\Delta t$ of a blood sample to the two biosensor sections is measured to determine a blood viscosity. Further, similar to Embodiment 8, a blood sugar level correction amount $\Delta If'$ obtained based on the thus obtained blood viscosity value is added to an actual measured value to determine a correct blood sugar level.

As described above, application of the biosensor of the present embodiment to a biosensor device realizes measurement with higher precision than the conventional cases.

(Embodiment 10)

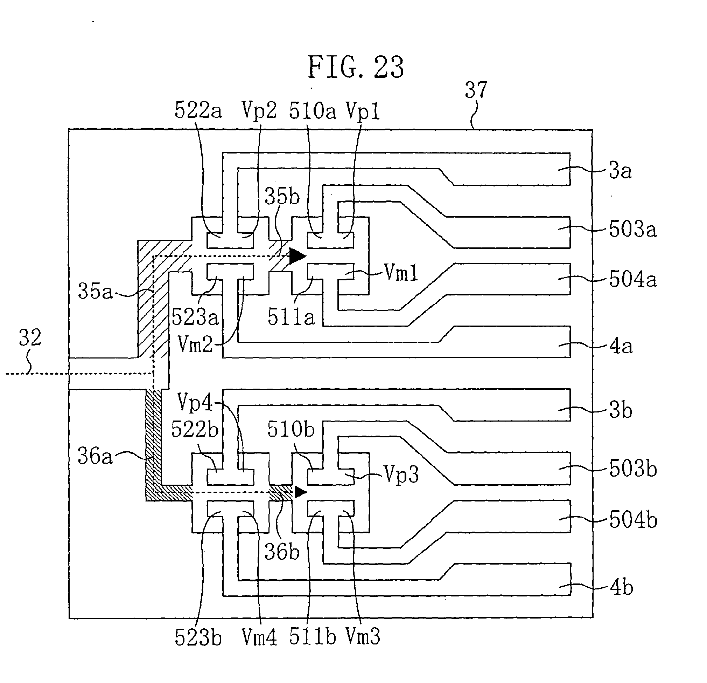

FIG. 23 is a plan view showing a biosensor according to Embodiment 10 of the present invention. As shown in the drawing, a biosensor 37 of the present embodiment has a construction in which four biosensor sections (a first biosensor section, a second biosensor section, a third biosensor section, and a fourth biosensor section) having the same characteristics are connected in parallel and in series, when viewing from a sample application spot, by means of capillaries different in width.

Two biosensors which are the same as the aforementioned biosensor in Embodiment 8 are so used that the measuring circuit **509** handles four biosensor sections in a biosensor device using the biosensor 37 of the present embodiment. Only the characteristics of the biosensor of the present embodiment will be described.

In the biosensor 37 of the present embodiment, a first biosensor section having a working pole **510a** and a counter pole **511a** and a second biosensor section having a working pole **522a** and a counter pole **532a** are connected in series to the sample application spot, similar to the biosensor sections in Embodiment 8.

As well, a third biosensor section having a working pole 510b and a counter pole **511b** and a fourth biosensor section having a working pole 522b and a counter pole 532b are connected in series to the sample application spot.

A capillary **35a** for supplying a blood sample to the second biosensor section and a capillary **35b** for connecting the first biosensor section and the second biosensor section have a width and a cross section larger than a capillary **36a** for supplying the blood sample to the fourth biosensor section and a capillary **36b** for connecting the third biosensor section and the fourth biosensor section.

With the above construction, arrival time differences $\Delta t1$, $\Delta t2$, $\Delta t3$ of the blood to the four biosensor sections are calculated utilizing the phenomenon that speed of blood transferring in a capillary varies depending on the width of the capillary and the phenomenon that speed of blood transferring in a capillary varies depending on the blood viscosity. The calculation of the arrival time differences leads to calculation of a blood viscosity. Then, a blood sugar value correction value $\Delta If'$ obtained based on the thus obtained blood viscosity value is added to an actual measured value to determine an accurate blood sugar level.

Especially, the use of the biosensor of the present embodiment can obtain the arrival time differences $\Delta t$ of which data amount is three times those of Embodiments 8 and 9. This means tree-time increase in precision of the blood sugar level correction value $\Delta If'$, resulting in further precise measurement.

As described above, application of the biosensor of the present embodiment to the biosensor devices of Embodiments 5 to 7 attains a highly precise measured result.

(Embodiment 11)

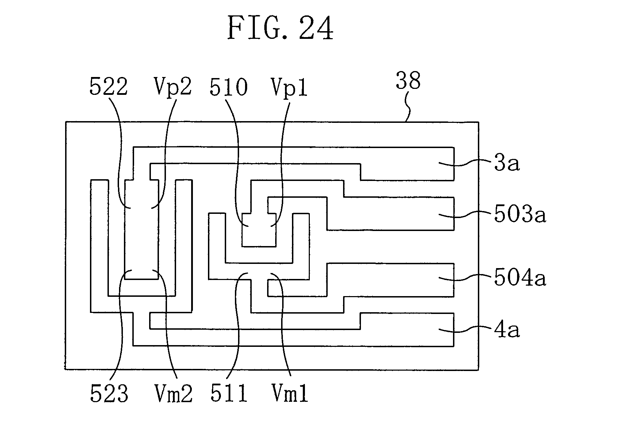

FIG. **24** is a plan view showing a biosensor according to Embodiment 11 of the present invention.

A biosensor **38** of the present embodiment is composed of two biosensor sections different in characteristics. For example, in the example shown in FIG. **24,** the working pole **522** of the second biosensor section has a larger area than the working pole **510** of the first biosensor section and the counter pole **523** of the second biosensor section has a larger area than the counter pole **511** of the first biosensor section. With this structure, the contact area of each pole of the second biosensor section with a blood sample becomes large, so that time of a reaction of glucose using an enzyme as a catalyst is shortened in the second biosensor section compared with that in the first biosensor section. Wherein, in a biosensor device using the biosensor of the present embodiment, the measuring circuit **509** in any of the biosensor devices in Embodiments 5 to 10 is used as the measuring circuit.

In the biosensor device of the present embodiment, two biosensor sections different in characteristics are used to enable calculation of a blood viscosity according to the difference $\Delta t$ in time until measured values are obtained in the biosensor sections and the working pole currents **If1, If2.** Then, a blood sugar level correction amount $\Delta If'$ obtained from the thus obtained blood viscosity value is added to an actual measured value, thereby determining a more accurate blood sugar level.

As described above, when the biosensor of the present embodiment is applied to the biosensor devices of Embodiments 5 to 10, measurement with high precision can be attained.

It is noted that FIG. **24** shows the example in which the two kinds of biosensor sections are included in the biosensor **38,** but three or more kinds of biosensors different in characteristics may be included in the biosensor. In this case, the number of $\Delta t$ that can be measured increases, enabling measurement with further higher precision.

**Industrial Applicability**

As described above, the biosensor device of the present invention is used for measuring a material that generates electrons by a chemical reaction or an enzyme reaction, such as blood sugar, lactic acid, and the like, and is useful for medical development greatly.

**Claims**

1. A biosensor device comprising:

   a biosensor including a biosensor section having a working pole and a counter pole facing the working pole with an interval left for allowing a to-be-tested fluid containing a to-be-measured material to flow therein; and a measuring circuit for applying voltage between the working pole and the counter pole at measurement and for measuring a concentration of the to-be-measured material from a current flowing in the biosensor section,

   wherein the measuring circuit changes the voltage applied between the working pole and the counter pole chronologically.

2. The biosensor device of Claim 1, wherein the measuring circuit includes:

   a working pole electrode connected to the working pole;
   a first voltage source that applies first voltage to the working pole electrode;
   a counter pole electrode connected to the counter pole;
   a second voltage source that applies second voltage to the counter pole electrode;
   an ammeter added to at least one of the first voltage source and the second voltage source;
   a reference voltage source that supplies working pole control voltage equivalent to the first voltage to the first voltage source and supplies counter pole control voltage equivalent to the second voltage to the second voltage source; and
   a signal processing circuit for processing a current amount signal output, according to the current flowing in the biosensor, from the first voltage source or the second voltage source to which the ammeter is added.

3. The biosensor device of Claim 1, wherein
   the measuring circuit applies voltage biased at a constant voltage and modulated by a rectangular wave to at least one of the working pole and the counter pole.

4. The biosensor device of Claim 1, wherein
   the measuring circuit applies voltage biased at a constant voltage and modulated by a spreading code to at least one of the working pole and the counter pole.

5. The biosensor device of Claim 1, wherein
   the measuring circuit applies voltage biased at a constant voltage and modulated by a sine wave to at least one of the working pole and the counter pole.

6. The biosensor device of Claim 5, wherein
   the measuring circuit further includes a low-pass-filter-equipped voltage source connected to the working pole or the counter pole and a $\Delta\Sigma$ modulator connected to the low-pass-filter-equipped voltage source, and
   the voltage modulated by the sine wave is generated in series connection of the $\Delta\Sigma$ modulator and the low-pass-filter-equipped voltage source.

7. A biosensor device comprising:

   a biosensor including a plurality of biosensor sections each having a working pole and a counter pole facing the working pole with an interval left for allowing a to-be-tested fluid containing a to-be-measured material to flow therein; and
   a measuring circuit for applying different voltages between the working poles and the counter poles of the respective biosensor sections at measurement and for measuring a concentration of the to-be-measured material based on a current flowing in the working pole or the counter pole of each of the biosensor sections.

8. The biosensor device of Claim 7, wherein
   the measuring circuit measures a concentration of the to-be-measured material based on the currents flowing from the working poles and the currents flowing from the counter poles of the biosensor sections.

9. The biosensor device of Claim 7, wherein
   the biosensor further includes a sample application spot to which the to-be-tested fluid is to be spot-applied and

capillaries for supplying the to-be-tested fluid to the biosensor sections, and
the plurality of biosensor sections are connected in series with each other by means of the capillaries when viewing from the sample application spot.

**10.** The biosensor device of Claim 7, wherein
the biosensor further includes a sample application spot to which the to-be-tested fluid is to be spot-applied and capillaries for supplying the to-be-tested fluid to the biosensor sections, and
the plurality of biosensor sections are connected in parallel with each other by means of the capillaries when viewing from the sample application spot, the capillaries for supplying the to-be-tested fluid to the biosensor sections being different from each other in size.

**11.** The biosensor device of Claim 7, wherein
the biosensor further includes a sample application spot to which the to-be-tested fluid is to be spot-applied, a first capillary and a second capillary, which are different from each other in size, for supplying the to-be-tested fluid to the biosensor sections, and the plurality of biosensor sections,
at least two biosensor sections of the plurality of biosensor sections are connected with each other in series by means of the first capillary when viewing from the sample application spot,
at least two biosensor sections of the plurality of biosensor sections are connected with each other in series by means of the second capillary when viewing from the sample application spot, and
the biosensor sections connected by means of the first capillary and the biosensor sections connected by means of the second capillary are connected in parallel with each other when viewing from the sample application spot.

**12.** The biosensor device of Claim 7, wherein
the plurality of biosensor sections have different characteristics.

**13.** A biosensor device comprising:

a biosensor including a plurality of biosensor sections each having a working pole and a counter pole facing the working pole with an interval left for allowing a to-be-tested fluid containing a to-be-measured material to flow therein, a sample application spot to which the to-be-tested fluid is to be spot-applied, and a capillary for supplying the to-be-tested fluid to the biosensor sections; and
a measuring circuit for applying voltage between the working pole and the counter pole of each of the biosensor sections at measurement and for measuring a concentration of the to-be-measured material based on a current flowing from the working pole or the counter pole of each of the biosensor sections,
wherein the plurality of biosensor sections are connected in series with each other by means of the capillary when viewing from the sample application spot.

**14.** A biosensor device comprising:

a biosensor including a plurality of biosensor sections each having a working pole and a counter pole facing the working pole with an interval left for allowing a to-be-tested fluid containing a to-be-measured material to flow therein, a sample application spot to which the to-be-tested fluid is to be spot-applied, and capillaries for supplying the to-be-tested fluid to the biosensor sections; and
a measuring circuit for applying voltage between the working pole and the counter pole of each of the biosensor sections at measurement and for measuring a concentration of the to-be-measured material based on a current flowing from the working pole or the counter pole of each of the biosensor sections,
wherein the plurality of biosensor sections are connected in parallel with each other by means of the capillaries when viewing from the sample application spot, the capillaries for supplying the to-be-tested fluid to the biosensor sections being different from each other in size.

**15.** A biosensor device comprising:

a biosensor including a plurality of biosensor sections each having a working pole and a counter pole facing the working pole with an interval left for allowing a to-be-tested fluid containing a to-be-measured material to flow therein, a sample application spot to which the to-be-tested fluid is to be spot-applied, and a first capillary and a second capillary for supplying the to-be-tested fluid to the biosensor sections; and
a measuring circuit for applying voltage between the working pole and the counter pole of each of the biosensor sections at measurement and for measuring a concentration of the to-be-measured material based on a current flowing from the working pole or the counter pole of each of the biosensor sections,
wherein the first capillary and the second capillary are different from each other in size,
at least two biosensor sections of the plurality of biosensor sections are connected with each other in series by means of the first capillary when viewing from the sample application spot,
at least two biosensor sections of the plurality of biosensor sections are connected with each other in series by means of the second capillary when viewing from the sample application spot, and
the biosensor sections connected by means of the first capillary and the biosensor sections connected by means of the second capillary are connected in parallel with each other when viewing from the sample application spot.

**16.** A biosensor device comprising:

a biosensor including a plurality of biosensor sections different from each other in characteristics, each of the plurality of biosensor sections including a working pole and a counter pole facing the working pole with an interval left for allowing a to-be-tested fluid containing a to-be-measured material to flow therein; and
a measuring circuit for applying voltage between the working pole and the counter pole of each of the biosensor sections at measurement and for measuring a concentration of the to-be-measured material based on a current flowing from the working pole or the counter pole of each of the biosensor sections.

**17.** A biosensor chip comprising:

a biosensor including a biosensor section having a working pole and a counter pole facing the working pole with an interval left for allowing a to-be-tested fluid containing a to-be-measure material to flow therein; and
a measuring circuit provided on a substrate together with the biosensor for applying voltage between the working pole and the counter pole at measurement and for measuring a concentration of the to-be-measured material from currents flowing in the biosensor section,
wherein the measuring circuit changes the voltage applied between the working pole and the counter pole chronologically.

**18.** The biosensor chip of Claim 17, wherein
the measuring circuit applies to at least one of the working pole and the counter pole voltage biased at a constant voltage and modulated by a rectangular wave.

**19.** The biosensor chip of Claim 17, wherein
the measuring circuit applies to at least one of the working pole and the counter pole voltage biased at a constant voltage and modulated by a spreading code.

**20.** The biosensor chip of Claim 17, wherein
the measuring circuit applies to at least one of the working pole and the counter pole voltage biased at a constant voltage and modulated by a sine wave.

**21.** A biosensor chip comprising:

a biosensor including a plurality of biosensor sections each having a working pole and a counter pole facing the working pole with an interval left for allowing a to-be-tested fluid containing a to-be-measured material to flow therein; and
a measuring circuit provided on a substrate together with the biosensor for applying different voltages between the working poles and the counter poles of the biosensor sections at measurement and for measuring a concentration of the to-be-measured material based on a current flowing from the working poles or the counter poles of the biosensor sections.

**22.** A biosensor chip comprising:

a biosensor including: a plurality of biosensor sections each having a working pole and a counter pole facing the working pole with an interval left for allowing a to-be-tested fluid containing a to-be-measured material to flow therein; a sample application spot to which the to-be-tested fluid is to be spot-applied; and capillaries for supplying the to-be-tested fluid to the biosensor sections; and
a measuring circuit provided on a substrate together with the biosensor for applying voltage between the working pole and the counter pole of each of the biosensor sections at measurement and for measuring a concentration of the to-be-measured material based on a current flowing from the working pole or the counter pole of each of the biosensor sections,
wherein the plurality of biosensor sections are connected in series with each other by means of a capillary when viewing from the sample application spot.

23. A biosensor chip comprising:

a biosensor including: a plurality of biosensor sections each having a working pole and a counter pole facing the working pole with an interval left for allowing a to-be-tested fluid containing a to-be-measured material to flow therein; a sample application spot to which the to-be-tested fluid is to be spot-applied; and capillaries for supplying the to-be-tested fluid to the biosensor sections; and
a measuring circuit provided on a substrate together with the biosensor for applying voltage between the working pole and the counter pole of each of the biosensor sections at measurement and for measuring a concentration of the to-be-measured material based on a current flowing from the working pole or the counter pole of each of the biosensor sections,
wherein the plurality of biosensor sections are connected in parallel with each other by means of the capillaries when viewing from the sample application spot, the capillaries for supplying the to-be-tested fluid to the biosensor sections being different from each other in size.

24. A biosensor chip comprising:

a biosensor including: a plurality of biosensor sections each having a working pole and a counter pole facing the working pole with an interval left for allowing a to-be-tested fluid containing a to-be-measured material to flow therein; a sample application spot to which the to-be-tested fluid is to be spot-applied; and a first capillary and second capillary for supplying the to-be-tested fluid to the biosensor sections; and
a measuring circuit provided on a substrate together with the biosensor for applying voltage between the working pole and the counter pole of each of the biosensor sections at measurement and for measuring a concentration of the to-be-measured material based on a current flowing from the working pole or the counter pole of each of the biosensor sections,
wherein the first capillary and the second capillary are different from each other in size,
at least two biosensor sections of the plurality of biosensor sections are connected with each other in series by means of the first capillary when viewing from the sample application spot,
at least two biosensor sections of the plurality of biosensor sections are connected with each other in series by means of the second capillary when viewing from the sample application spot, and
the biosensor sections connected by means of the first capillary and the biosensor sections connected by means of the second capillary are connected in parallel with each other when viewing from the sample application spot.

25. A biosensor chip comprising:

a biosensor including a plurality of biosensor sections different from each other in characteristics, each of the plurality of biosensor sections including a working pole and a counter pole facing the working pole with an interval left for allowing a to-be-tested fluid containing a to-be-measured material to flow therein; and
a measuring circuit provided on a substrate together with the biosensor for applying voltage between the working pole and the counter pole of each of the biosensor sections at measurement and for measuring a concentration of the to-be-measured material base on a current flowing from the working pole or the counter pole of each of the biosensor sections.

26. A biosensor comprising:

a plurality of biosensor sections each including a working pole and a counter pole facing the working pole with an interval left for allowing a to-be-tested fluid containing a to-be-measured material to flow therein;
a sample application spot to which the to-be-tested fluid is to be spot-applied; and
a capillary for supplying the to-be-tested fluid to the plurality of biosensor sections,
wherein the plurality of biosensor sections are connected in series with each other by means of the capillary when viewing from the sample application spot.

27. A biosensor comprising:

a plurality of biosensor sections each including a working pole and a counter pole facing the working pole with an interval left for allowing a to-be-tested fluid containing a to-be-measured material to flow therein;
a sample application spot to which the to-be-tested fluid is to be spot-applied; and
capillaries for supplying the to-be-tested fluid to the plurality of biosensor sections,
wherein the plurality of biosensor sections are connected in parallel with each other by means of the capillaries when viewing from the sample application spot, the capillaries for supplying the to-be-tested fluid to the plurality of biosensor sections being different from each other in size.

28. A biosensor comprising:

a plurality of biosensor sections each including a working pole and a counter pole facing the working pole with an interval left for allowing a to-be-tested fluid containing a to-be-measured material to flow therein;
a sample application spot to which the to-be-tested fluid is to be spot-applied; and
a first capillary and a second capillary for supplying the to-be-tested fluid to the plurality of biosensor sections,
wherein the first capillary and the second capillary are different from each other in size,
at least two biosensor sections of the plurality of biosensor sections are connected in series with each other by means of the first capillary when viewing from the sample application spot,
at least two biosensor sections of the plurality of biosensor sections are connected in series with each other by means of the second capillary when viewing from the sample application spot, and
the biosensor sections connected by means of the first capillary and the biosensor sections connected by means of the second capillary are connected in parallel with each other when viewing from the sample application spot.

29. A biosensor comprising a plurality of biosensor sections different in characteristics each including a working pole and a counter pole facing the working pole with an interval left for allowing a to-be-tested fluid containing a to-be-measured material to flow therein.

**Amended claims under Art. 19.1 PCT**

1. (Cancel)

2. (Cancel)

3. (Cancel)

4. (Amended) A biosensor device comprising:

a biosensor including a biosensor section having a working pole and a counter pole facing the working pole with an interval left for allowing a to-be-tested fluid containing a to-be-measured material to flow therein; and
a measuring circuit for applying voltage between the working pole and the counter pole at measurement and for measuring a concentration of the to-be-measured material from a current flowing in the biosensor section, wherein the measuring circuit applies to at least one of the working pole and the counter pole voltage biased at a constant voltage and modulated by a spreading code while changing the voltage applied between the working pole and the counter pole chronologically.

5. (Amended) A biosensor device comprising:

a biosensor including a biosensor section having a working pole and a counter pole facing the working pole with an interval left for allowing a to-be-tested fluid containing a to-be-measured material to flow therein; and
a measuring circuit for applying voltage between the working pole and the counter pole at measurement and for measuring a concentration of the to-be-measured material from a current flowing in the biosensor section, wherein the measuring circuit applies to at least one of the working pole and the counter pole voltage biased at a constant voltage and modulated by a sine wave while changing the voltage applied between the working pole and the counter pole chronologically.

6. The biosensor device of Claim 5, wherein
the measuring circuit further includes a low-pass-filter-equipped voltage source connected to the working pole or the counter pole and a $\Delta\Sigma$ modulator connected to the low-pass-filter-equipped voltage source, and

the voltage modulated by the sine wave is generated in series connection of the $\Delta\Sigma$ modulator and the low-pass-filter-equipped voltage source.

**7.** (Cancel)

**8.** (Cancel)

**9.** (Cancel)

**10.** (Amended) A biosensor device comprising:

a biosensor including a plurality of biosensor sections each having a working pole and a counter pole facing the working pole with an interval left for allowing a to-be-tested fluid containing a to-be-measured material to flow therein; and
a measuring circuit for applying different voltages between the working poles and the counter poles of the respective biosensor sections at measurement and for measuring a concentration of the to-be-measured material based on a current flowing in the working pole or the counter pole of each of the biosensor sections,
wherein the biosensor further includes a sample application spot to which the to-be-tested fluid is to be spot-applied and capillaries for supplying the to-be-tested fluid to the biosensor sections, and
the plurality of biosensor sections are connected in parallel with each other by means of the capillaries when viewing from the sample application spot, the capillaries for supplying the to-be-tested fluid to the biosensor sections being different from each other in size.

**11.** (Amended) A biosensor device comprising:

a biosensor including a plurality of biosensor sections each having a working pole and a counter pole facing the working pole with an interval left for allowing a to-be-tested fluid containing a to-be-measured material to flow therein; and
a measuring circuit for applying different voltages between the working poles and the counter poles of the respective biosensor sections at measurement and for measuring a concentration of the to-be-measured material based on a current flowing in the working pole or the counter pole of each of the biosensor sections,
wherein the biosensor further includes a sample application spot to which the to-be-tested fluid is to be spot-applied, a first capillary and a second capillary, which are different from each other in size, for supplying the to-be-tested fluid to the biosensor sections, and the plurality of biosensor sections,
at least two biosensor sections of the plurality of biosensor sections are connected with each other in series by means of the first capillary when viewing from the sample application spot,
at least two biosensor sections of the plurality of biosensor sections are connected with each other in series by means of the second capillary when viewing from the sample application spot, and
the biosensor sections connected by means of the first capillary and the biosensor sections connected by means of the second capillary are connected in parallel with each other when viewing from the sample application spot.

**12.** (Amended) A biosensor device comprising:

a biosensor including a plurality of biosensor sections each having a working pole and a counter pole facing the working pole with an interval left for allowing a to-be-tested fluid containing a to-be-measured material to flow therein; and
a measuring circuit for applying different voltages between the working poles and the counter poles of the respective biosensor sections at measurement and for measuring a concentration of the to-be-measured material based on a current flowing in the working pole or the counter pole of each of the biosensor sections,
wherein the plurality of biosensor sections have different characteristics.

**13.** (Cancel)

**14.** A biosensor device comprising:

a biosensor including a plurality of biosensor sections each having a working pole and a counter pole facing the working pole with an interval left for allowing a to-be-tested fluid containing a to-be-measured material to flow therein, a sample application spot to which the to-be-tested fluid is to be spot-applied, and capillaries for supplying the to-be-tested fluid to the biosensor sections; and
a measuring circuit for applying voltage between the working pole and the counter pole of each of the biosensor sections at measurement and for measuring a concentration of the to-be-measured material based on a current flowing from the working pole or the counter pole of each of the biosensor sections,
wherein the plurality of biosensor sections are connected in parallel with each other by means of the capillaries when viewing from the sample application spot, the capillaries for supplying the to-be-tested fluid to the biosensor sections being different from each other in size.

**15.** A biosensor device comprising:

a biosensor including a plurality of biosensor sections each having a working pole and a counter pole facing the working pole with an interval left for allowing a to-be-tested fluid containing a to-be-measured material to flow therein, a sample application spot to which the to-be-tested fluid is to be spot-applied, and a first capillary and a second capillary for supplying the to-be-tested fluid to the biosensor sections; and
a measuring circuit for applying voltage between the working pole and the counter pole of each of the biosensor sections at measurement and for measuring a concentration of the to-be-measured material based on a current flowing from the working pole or the counter pole of each of the biosensor sections,
wherein the first capillary and the second capillary are different from each other in size,
at least two biosensor sections of the plurality of biosensor sections are connected with each other in series by means of the first capillary when viewing from the sample application spot,
at least two biosensor sections of the plurality of biosensor sections are connected with each other in series by means of the second capillary when viewing from the sample application spot, and
the biosensor sections connected by means of the first capillary and the biosensor sections connected by means of the second capillary are connected in parallel with each other when viewing from the sample application spot.

**16.** A biosensor device comprising:

a biosensor including a plurality of biosensor sections different from each other in characteristics, each of the plurality of biosensor sections including a working pole and a counter pole facing the working pole with an interval left for allowing a to-be-tested fluid containing a to-be-measured material to flow therein; and
a measuring circuit for applying voltage between the working pole and the counter pole of each of the biosensor sections at measurement and for measuring a concentration of the to-be-measured material based on a current flowing from the working pole or the counter pole of each of the biosensor sections.

**17.** (Cancel)

**18.** (Cancel)

**19.** (Amended) A biosensor chip comprising:

a biosensor including a biosensor section having a working pole and a counter pole facing the working pole with an interval left for allowing a to-be-tested fluid containing a to-be-measure material to flow therein; and
a measuring circuit provided on a substrate together with the biosensor for applying voltage between the working pole and the counter pole at measurement and for measuring a concentration of the to-be-measured material from currents flowing in the biosensor section,
wherein the measuring circuit applies to at least one of the working pole and the counter pole voltage biased at a constant voltage and modulated by a spreading code while changing the voltage applied between the working pole and the counter pole chronologically.

**20.** (Amended) A biosensor chip comprising:

a biosensor including a biosensor section having a working pole and a counter pole facing the working pole with an interval left for allowing a to-be-tested fluid containing a to-be-measure material to flow therein; and
a measuring circuit provided on a substrate together with the biosensor for applying voltage between the working pole and the counter pole at measurement and for measuring a concentration of the to-be-measured material from currents flowing in the biosensor section,
wherein the measuring circuit applies to at least one of the working pole and the counter pole voltage biased at a constant voltage and modulated by a sine wave while changing the voltage applied between the working pole and the counter pole chronologically.

**21.** (Cancel)

**22.** (Cancel)

**23.** A biosensor chip comprising:

a biosensor including: a plurality of biosensor sections each having a working pole and a counter pole facing the working pole with an interval left for allowing a to-be-tested fluid containing a to-be-measured material to flow therein; a sample application spot to which the to-be-tested fluid is to be spot-applied; and capillaries for supplying the to-be-tested fluid to the biosensor sections; and
a measuring circuit provided on a substrate together with the biosensor for applying voltage between the working pole and the counter pole of each of the biosensor sections at measurement and for measuring a concentration of the to-be-measured material based on a current flowing from the working pole or the counter pole of each of the biosensor sections,
wherein the plurality of biosensor sections are connected in parallel with each other by means of the capillaries when viewing from the sample application spot, the capillaries for supplying the to-be-tested fluid to the biosensor sections being different from each other in size.

**24.** A biosensor chip comprising:

a biosensor including: a plurality of biosensor sections each having a working pole and a counter pole facing the working pole with an interval left for allowing a to-be-tested fluid containing a to-be-measured material to flow therein; a sample application spot to which the to-be-tested fluid is to be spot-applied; and a first capillary and second capillary for supplying the to-be-tested fluid to the biosensor sections; and
a measuring circuit provided on a substrate together with the biosensor for applying voltage between the working pole and the counter pole of each of the biosensor sections at measurement and for measuring a concentration of the to-be-measured material based on a current flowing from the working pole or the counter pole of each of the biosensor sections,
wherein the first capillary and the second capillary are different from each other in size,
at least two biosensor sections of the plurality of biosensor sections are connected with each other in series by means of the first capillary when viewing from the sample application spot,
at least two biosensor sections of the plurality of biosensor sections are connected with each other in series by means of the second capillary when viewing from the sample application spot, and
the biosensor sections connected by means of the first capillary and the biosensor sections connected by means of the second capillary are connected in parallel with each other when viewing from the sample application spot.

**25.** A biosensor chip comprising:

a biosensor including a plurality of biosensor sections different from each other in characteristics, each of the plurality of biosensor sections including a working pole and a counter pole facing the working pole with an interval left for allowing a to-be-tested fluid containing a to-be-measured material to flow therein; and
a measuring circuit provided on a substrate together with the biosensor for applying voltage between the working pole and the counter pole of each of the biosensor sections at measurement and for measuring a concentration of the to-be-measured material base on a current flowing from the working pole or the counter pole of each of the biosensor sections.

**26.** (Cancel)

**27.** A biosensor comprising:

a plurality of biosensor sections each including a working pole and a counter pole facing the working pole with an interval left for allowing a to-be-tested fluid containing a to-be-measured material to flow therein;
a sample application spot to which the to-be-tested fluid is to be spot-applied; and
capillaries for supplying the to-be-tested fluid to the plurality of biosensor sections,
wherein the plurality of biosensor sections are connected in parallel with each other by means of the capillaries when viewing from the sample application spot, the capillaries for supplying the to-be-tested fluid to the plurality of biosensor sections being different from each other in size.

28. A biosensor comprising:

a plurality of biosensor sections each including a working pole and a counter pole facing the working pole with an interval left for allowing a to-be-tested fluid containing a to-be-measured material to flow therein;
a sample application spot to which the to-be-tested fluid is to be spot-applied; and
a first capillary and a second capillary for supplying the to-be-tested fluid to the plurality of biosensor sections, wherein the first capillary and the second capillary are different from each other in size,
at least two biosensor sections of the plurality of biosensor sections are connected in series with each other by means of the first capillary when viewing from the sample application spot,
at least two biosensor sections of the plurality of biosensor sections are connected in series with each other by means of the second capillary when viewing from the sample application spot, and
the biosensor sections connected by means of the first capillary and the biosensor sections connected by means of the second capillary are connected in parallel with each other when viewing from the sample application spot.

29. (Cancel)

FIG. 1

509 — measuring circuit

507 — signal processing circuit

508 — reference voltage source

505a — first voltage source

506 — second voltage source

s517

Vpr1 Vmr1

503 — Vp1

504

Vf1

Vm1

If1

501 — biosensor section

510

511

# FIG. 2

voltage (V)

Vpr1

Vf1

Vmr1

0

time(s)

charge amount
Q($\mu$C)

$\int(If1)dt$

measurement in
biosensor section 501

fomenting in
biosensor section 501

0                                    t          time(s)

EP 1 729 122 A1

# FIG. 3

voltage (V)

Vpr1

Vf1

Vmr1

0

time(s)

charge amount
$Q(\mu C)$

measurement in
biosensor section 501

$\int (If1)\,dt$

fomenting in
biosensor section 501

0                                                          t

time(s)

EP 1 729 122 A1

# FIG. 4

voltage (V)

Vpr1

$\uparrow$ Vf1

Vmr1

0

time(s)

EP 1 729 122 A1

charge amount
Q($\mu$C)

measurement in
biosensor section 501

$\int (If1)dt$

fomenting in
biosensor section 501

0                                                          t

time(s)

# FIG. 5

## FIG. 6

EP 1 729 122 A1

# FIG. 7

voltage (V)

Vpr1

↑Vf1

Vmr1

↑Vf2

Vmr2

0

time(s)

charge amount
Q(μC)

measurement in
biosensor section
521

∫(If2)dt

∫(If1)dt

fomenting in
biosensor section 521

time(s)

charge amount
Q(μC)

measurement in biosensor section 501

∫(If2)dt

∫(If1)dt

fomenting in
biosensor section 501

0                                                                    t

time(s)

EP 1 729 122 A1

# FIG. 8

EP 1 729 122 A1

## FIG. 9

## FIG. 10

# FIG. 11

blood sugar level (mg/d1)

current ($\mu$ V)

BSL

If

$\triangle$If'

If2

$\triangle$If

Vf2

If1

Vf1

runny

viscosity

sticky

EP 1 729 122 A1

# FIG. 12

EP 1 729 122 A1

# FIG. 13

voltage (V)

Vpr1

Vf1

Vmr1

Vf2

Vmr2

0
time(s)

charge amount
Q($\mu$C)

measurement in
biosensor section 521

$\int (Im2)\,dt$

$\int (Im1)\,dt$

fomenting in
biosensor section 521

time(s)

charge amount
Q($\mu$C)

measurement in
biosensor section 501

$\int (Im2)\,dt$

$\int (Im1)\,dt$

fomenting in
biosensor section 501

0                                                          t
time(s)

## FIG. 14

EP 1 729 122 A1

FIG. 15

measuring circuit 509

507 signal processing circuit

508 reference voltage source

s517 s24 s17 s25

Vpr1 Vmr1 Vmr2

505a first voltage source

506a second voltage source

527a third voltage source

528a fourth voltage source

503 Vp1 Vf1 Vm1 504 3 Vp2 Vf2 Vm2 4

If1 Im1 If2 Im2

biosensor section 1

501 510 511

521 biosensor section 522 523

# FIG. 16

voltage (V)

Vpr1

↑Vf1

Vmr1

↑Vf2

Vmr2

0

time (s)

charge amount
Q(μC)

measurement in
biosensor section 521

$\int(If2)dt+\int(Im2)dt$

$\int(If1)dt+\int(Im1)dt$

fomenting in
biosensor section 521

time (s)

charge amount
Q(μC)

measurement in
biosensor section 501

$\int(If2)dt+\int(Im2)dt$

$\int(If1)dt+\int(Im1)dt$

fomenting in
biosensor section 501

0                                                                                    t

time (s)

EP 1 729 122 A1

FIG. 17

# FIG. 18

EP 1 729 122 A1

# FIG. 19

# FIG. 20

voltage (V)

Vpr1 ———————————————————————————————————————————

↑Vf1      ↑Vf2

Vmr1 ———————————————————————————————————————————

0

time (s)

charge amount
Q(μC)

measurement in
biosensor section 521

∫(If2)dt

fomenting in
biosensor section 521

time (s)

charge amount
Q(μC)

△t          △t

measurement in
biosensor section 501

∫(If1)dt

fomenting in
biosensor section 501

0    t5        t6    t7                    t

time (s)

FIG. 21

FIG. 22

EP 1 729 122 A1

FIG. 23

Labels: 37, 3a, 503a, 504a, 4a, 3b, 503b, 504b, 4b, 32, 35a, 36a, 35b, 36b, 511a, 510b, Vm1, Vp3, Vp1, 510a, Vp2, 522a, 523a, Vm2, Vp4, 522b, 523b, 511b, Vm3, Vm4

49

# FIG. 24

522  Vp2  510  Vp1  38

3a

503a

504a

4a

523  Vm2  511  Vm1

## FIG. 25
### PRIOR ART

biosensor section — 1501, 1510, 1511

measuring circuit — 1509

first voltage source — 1505a

signal processing circuit — 1507

second voltage source — 1506

reference voltage source — 1508

If1, Vp1 (1503), Vf1, Vm1 (1504), s1517, Vpr1, Vmr1

# FIG. 26
## PRIOR ART

voltage (V)

Vpr1

Vf1

Vmr1

0         time(s)

charge amount
Q($\mu$C)

measurement in
biosensor section

$\int(If1)dt$

fomenting in
biosensor section

0         t         time(s)

EP 1 729 122 A1

FIG. 27
PRIOR ART

FIG. 28
PRIOR ART

1510 Vp1          1501

1503

1504

1511 Vm1

FIG. 29
PRIOR ART

1520

1510 Vp1

1509

1511 Vm1

FIG. 30
PRIOR ART

# FIG. 31
## PRIOR ART

voltage (V)

Vpr1

Vf1

Vmr1

0

time(s)

charge amount
Q($\mu$C)

$\int (If1)dt$

measurement in
biosensor section

$\triangle$If1

fomenting in
biosensor section

0                                                                    t          time(s)

EP 1 729 122 A1

**INTERNATIONAL SEARCH REPORT**

| International application No. |
|---|
| PCT/JP2004/018252 |

| A. CLASSIFICATION OF SUBJECT MATTER |
|---|
| Int.Cl$^7$ G01N27/416 |

According to International Patent Classification (IPC) or to both national classification and IPC

| B. FIELDS SEARCHED |
|---|
| Minimum documentation searched (classification system followed by classification symbols) |
| Int.Cl$^7$ G01N27/416, G01N27/447 |

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X<br><br>Y | JP 2003-294700 A (Toshiba Corp.),<br>15 October, 2003 (15.10.03),<br>Par. Nos. [0012], [0026], [0027], [0036];<br>Figs. 1, 6, 10<br>(Family: none) | 1-3,7,8,17,<br>18,21<br>9,13,22,26,<br>29 |
| Y | JP 2003-4752 A (Minolta Co., Ltd.),<br>08 January, 2003 (08.01.03),<br>Par. No. [0063]; Fig. 7<br>(Family: none) | 9,13,22,26 |

| ☒ Further documents are listed in the continuation of Box C. | ☐ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 March, 2005 (01.03.05) | 05 April, 2005 (05.04.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

INTERNATIONAL SEARCH REPORT

International application No.

PCT/JP2004/018252

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2002-502597 A (Aclara Biosciences, Inc.), 29 January, 2002 (29.01.02), Par. Nos. [0053] to [0055]; Figs. 16, 17 & US 006007690 A Column 17, line 9 to column 18, line 15 & JP 2002-502597 A      & JP 2000-515978 A & JP 2001-519907 A      & US 006074827 A & US 005770029 A      & US 006344326 B & US 2002-0119482 A    & US 2003-0224436 A & US 006176962 B      & US 2002-0053399 A & EP 001053298 A      & EP 001007953 A & EP 001015878 A      & WO 99-040174 A & WO 98-004909 A      & WO 98-045693 A & AU 002488799 A      & CA 002320362 A & AU 000758140 B      & AU 003968097 A & AU 000744264 B      & CA 002261869 A & AU 007101698 A      & CA 002285938 A | 29 |

Form PCT/ISA/210 (continuation of second sheet) (January 2004)

## INTERNATIONAL SEARCH REPORT

International application No.

PCT/JP2004/018252

| Box No. II | Observations where certain claims were found unsearchable (Continuation of item 2 of first sheet) |

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| Box No. III | Observations where unity of invention is lacking (Continuation of item 3 of first sheet) |

This International Searching Authority found multiple inventions in this international application, as follows:
   The matter common to claims 1-6, 7-12, 13, 14, 15, 16, 26, 27, 28, 29 relates to a biosensor including an action pole and a counter pole opposing to the action pole with an interval for flowing in of a fluid-to-be-inspected containing a material to be measured.
   However, the search has revealed that the biosensor including the action pole and the counter pole opposing to the action pole with an interval for flowing in of a fluid to be inspected containing a material to be measured is not novel since it is disclosed in document JP 2001-21525, column 8, line 37, column 9, line 6.
   (continued to extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**  ☐ The additional search fees were accompanied by the applicant's protest.

☒ No protest accompanied the payment of additional search fees.

Form PCT/ISA/210 (continuation of first sheet (2)) (January 2004)

**INTERNATIONAL SEARCH REPORT**

International application No.

PCT/JP2004/018252

Continuation of Box No.III of continuation of first sheet(2)

Accordingly, it is obvious that the inventions of claims 1-6, 7-12, 13, 14, 15, 16, 26, 27, 28, 29 do not satisfy the requirement of unity of invention.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002340853 A